# EUROPÄISCHE PATENTSCHRIFT

(11) **EP 1 159 281 B1**
(45) Veröffentlichungstag und Bekanntmachung des Hinweises auf die Patenterteilung: **30.01.2008**
(21) Anmeldenummer: 00916815.4
(22) Anmeldetag: 07.03.2000
(51) Int. Cl.: C07F 7/12, C07F 7/18, C07F 7/10, C08G 77/20, C08G 77/22, C08F 30/08

(54) **HYDROLYSIERBARE UND POLYMERISIERBARE SILANE**
HYDROLYSABLE AND POLYMERISABLE SILANES
SILANES HYDROLYSABLES ET POLYMERISABLES

(30) Priorität: 11.03.1999 DE 19910895
(43) Veröffentlichungstag der Anmeldung: 05.12.2001
(73) Patentinhaber: Fraunhofer-Gesellschaft zur Förderung der angewandten Forschung e.V., 80686 München (DE); Wolter, Herbert, Dr., 97941 Tauberbischofsheim (DE); Schmitzer, Siegfried, 97070 Würzburg (DE)
(72) Erfinder: WOLTER, Herbert, D-97941 Tauberbischofsheim (DE); SCHMITZER, Siegfried, D-97070 Würzburg (DE)
(86) Internationale Anmeldenummer: PCT/DE2000/000765
(87) Internationale Veröffentlichungsnummer: WO 2000/053612

(56) Entgegenhaltungen:
- EP-A- 0 136 680
- EP-A- 0 525 392
- DE-A- 4 011 044
- DE-C- 4 416 857
- US-A- 3 773 607
- US-A- 5 332 429
- US-A- 5 348 771
- CHEMICAL ABSTRACTS, vol. 125, no. 10, 2. September 1996 (1996-09-02) Columbus, Ohio, US; abstract no. 116129, YOSHINAGA, K. ET AL: "Control of polymer layer thickness in coating of monodispersed colloidal silica" XP002139872 & POLYM. POLYM. COMPOS. (1996), 4(3), 163-172 ,
- CHEMICAL ABSTRACTS, vol. 123, no. 26, 25. Dezember 1995 (1995-12-25) Columbus, Ohio, US; abstract no. 354510, ICHIMURA, KUNIHIRO ET AL: "Photoregulation of liquid crystal alignment by photoisomerizable molecula layers" XP002139873 & MOL. CRYST. LIQ. CRYST. SCI. TECHNOL., SECT. A (1995), 267, 381-6 ,
- CHEMICAL ABSTRACTS, vol. 118, no. 23, 7. Juni 1993 (1993-06-07) Columbus, Ohio, US; abstract no. 234237, OOTSUKI, TOSHIAKI: "Novel silanes as coupling agents and their preparation" XP002139874 & JP 04 346993 A (ARAKAWA CHEMICAL INDUSTRIES, LTD., JAPAN) 2. Dezember 1992 (1992-12-02)

## Beschreibung

Die Erfindung betrifft die Verwendung hydrolysierbarer und polymerisierbarer Silane zur Herstellung von Kieselsäurepolykondensaten bzw. Kieselsäureheteropolykondensaten, sowie die Verwendung dieser (Hetero-)Polykondensate selbst. Außerdem betrifft die Erfindung spezielle hydrolysierbare und polymerisierbare Silane, die sich für die genannten Verwendungen eignen sowie deren Herstellung.

Hydrolysierbare, organisch modifizierte Silane finden eine breite Anwendung bei der Herstellung kratzfester Beschichtungen für die unterschiedlichsten Substrate, für die Herstellung von Füllstoffen, von Klebe- und Dichtungsmassen oder von Formkörpern. Dabei werden diese Silane entweder alleine, in Mischungen oder in Gegenwart weiterer hydrolysierbarer und/oder kondensierbarer Komponenten hydrolytisch kondensiert, wobei die endgültige Härtung thermisch, photochemisch, oder redoxinduziert erfolgt.

So sind z.B. aus der DE 3407087 C2 kratzfeste Beschichtungen bekannt, die durch hydrolytische Kondensation einer Mischung entstehen, die u.a. aus einer hydrolysierbaren Titan- oder Zirkon-Verbindung und aus einem hydrolysierbaren, organofunktionellen Silan R'ₘ(R"Y)ₙSiX₍₄₋ₘ₋ₙ₎ besteht, wobei R' z.B. Alkyl oder Alkenyl ist, R" z.B. Alkylen oder Alkenylen und X einen hydrolysierbaren Rest darstellt.

Aus der DE 3536716 A1 sind z.B. Klebe- und Dichtungsmassen bekannt, die erhalten worden sind durch hydrolytische Kondensation eines oder mehrerer Organosilane der allgemeinen Formel RₘSiX₄₋ₘ und gegebenenfalls einer oder mehrerer der Komponenten SiX₄ und/oder Rₙ(R"Y)ₚSiX₄₋ₙ₋ₚ, wobei R und R" z.B. Alkyl, Alkenyl, Aryl, Alkylaryl, Arylalkyl, Alkenylaryl oder Arylalkenyl, X z.B. Wasserstoff, Halogen, Hydroxy, Alkoxy oder Acyloxy bedeutet, und Y z.B. ein Halogen oder eine gegebenenfalls substituierte Amino-, Amid-, Aldehyd-, Alkylcarbonyl-, Carboxy-, Hydroxy-, Mercapto- oder Cyono-Gruppe darstellt.

Ferner sind handelsübliche Silane mit reaktiven Doppelbindungen bekannt, wie z.B. (Meth)Acryloxy-Silane des folgenden Typs, 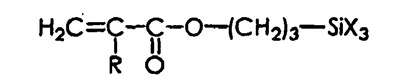 wobei R Wasserstoff oder Methyl bedeutet und X z.B. Halogen oder Alkoxy ist. Diese Silane sind hydrolysier- und polymerisierbar und können für die Herstellung der oben genannten Systeme eingesetzt werden. Sie bieten den großen Vorteil, daß die resultierende Beschichtung, die resultierende Füll-, Klebe- oder Dichtungsmasse oder der resultierende Formkörper durch Polymerisation an den reaktiven Doppelbindungen thermisch, photochemisch oder redoxinduziert gehärtet werden kann.

Handelsübliche Silane mit reaktiven Doppelbindungen, wie z.B. die oben genannten (Meth)Acryloxy-Silane, stellen im allgemeinen monofunktionelle Verbindungen mit einer C=C-Doppelbindung dar und sind in der Regel niedermolekulare und somit vor der Si-X-Hydrolyse und Kondensation relativ flüchtige Verbindungen, die aufgrund der vorhandenen Acryl-Gruppe toxikologisch bedenklich sind. Bei der Weiterverarbeitung durch Polymerisation oder modifizierte Funktionalisierung haben diese Silane ausserdern den Nachteil, dass aufgrund der Anwesenheit nur einer reaktiven C=C-Doppelbindung lediglich Kettenpolymere erhältlich sind und bei vorheriger Funktionalisierung diese für die organische Polymerisation notwendige C=C-Doppelbindung meist verloren geht. Ferner befindet sich zwischen der Doppelbindung und dem zur Bildung eines anorganischen Netzwerkes befähigten Silicium in der Regel nur eine kurze Kette , so dass die mechanischen Eigenschaften (Flexibilität etc.) über die organischen Gruppen nur in engen Grenzen variierbar sind.

Aus der DE 401 1044 C2 und der DE 4416857 C1 sind zwar hydrolysierbare und polymerisierbare Silane bekannt, die über mehr als eine reaktive C=C-Doppelbindung verfügen, und bei denen der Abstand zwischen der reaktiven Doppelbindung und dem zur Bildung eines anorganischen Netzwerks befähigten Silicium länger ist, aber es besteht immer noch Bedarf an einer Verbesserung, auch im Hinblick auf eine Funktionalisierung des Moleküls.

Aufgabe der vorliegenden Erfindung ist es deshalb, organisch modifizierte Kieselsaure (hetero) polymerisate aus Silanen bereit zu stellen, die hydrolysier- und polymerisierbar sind, die alleine, in Mischungen oder zusammen mit anderen hydrolysierbaren, kondensierbaren oder polymerisierbaren Komponenten zu kratzfesten Beschichtungen, zu Füll-, Klebe- oder Dichtungsmassen, zu Formkörpern oder zu Einbettmaterialien verarbeitet werden können. Diese Silane bzw. Kieselsaure (hetero) polykondensate sollen universell einsetzbar sein, und die Silane sollen in ein anorganisch-organisches Verbundsystem, d.h. in ein anorganisch-organisches Netzwerk eingebaut werden können. Ferner sollen die Silane schnell und einfach, d.h. ohne aufwendigen Syntheseprozess herzustellen sein. Desweiteren soll der Abstand zwischen Silicium und reaktiver Doppelbindung beliebig einstellbar sein, und das Silan soll ausserdern über mehrere C=C-Doppelbindungen verfügen.

Gelöst wird diese Aufgabe durch den Vorschlag, hydrolysierbare und polymerisierbare Silane der Formeln
in denen die Reste und Indices folgende Bedeutung haben:
- B =: geradkettiger oder verzweigter organischer Rest mit 2 bis 50 Kohlenstoff-Atomen und mit mindestens einer C=C-Doppelbindung, wobei die -CO-NH-Gruppe an ein Kohlenstoff-Atom des Restes B gebunden ist und B keine Norbornen-, Bicyclo[2.2.2]oct-2-en- oder 7-Oxabicyclo[2.2.1]hept-2-en-Gruppe enthält;
- R =: gegebenenfalls substituiertes Alkyl, Alkenyl, Aryl, Alkylaryl oder Arylalkyl mit jeweils 1 bis 15 Kohlenstoff-Atomen, wobei diese Reste Sauerstoff- und/oder Schwefel- und/oder Stickstoff-Atome enthalten können;
- R° =: gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können;
- R' =: gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff Atome enthalten können,
- X =: Wasserstoff, Halogen, Hydroxy, Alkoxy, Acyloxy, Alkylcarbonyl, Alkoxycarbonyl oder NR"₂, mit R" gleich Wasserstoff, Alkyl oder Aryl;
- a =: 1, 2 oder 3;
- b =: 1, 2 oder 3, mit a+b = 2, 3 oder 4;
- c =: 0 oder 1;
- d =: 1, 2, 3, 4, 5, 6, 7, 8, 9, oder 10;
- e =: 1, 2, 3 oder 4, mit e=1 für c=0,

Zur Herstellung von organisch modifizierten Kieselsäurepolykondensaten oder von organisch modifizierten Kieselsäureheteropolykondensaten für alle Zwecke bereitzustellen, ausgenommen die Verwendung der hergestellten organisch modifizierten Kieselsäurepolykondensate oder der organisch modifizierten Kieselsäureheteropolykondensate in Dentalmaterialien, wobei die genannten Kondensate durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit erzeugt werden, wobei auf der Basis monomerer Verbindungen 1 bis 100 Mol-Prozent der hydrolytisch kondensierbaren Verbindungen aus den genannten Silanen der allgemeinen Formel ausgewählt werden.

Außerdem stellt die Erfindung die Verwerdung von organisch vernetzten oder organisch vernetzbaren Kieselsäurepolykondensaten oder solchen Kieselsäureheteropolykondensaten gemäß Anspruch 10 sowie einige spezifische, für die Verwendungen geeignete Silane gemäß Anspruch 18 bereit.

Die Silane der Formeln Ia, Id, Ie, If und Ig sind über die Reste B polymerisierbar und über die Reste X hydrolysierbar. Über die hydrolysierbaren Gruppen kann ein anorganisches Netzwerk mit Si-O-SI-Einheiten aufgebaut werden, während durch die Polymersiation der im Rest B enthaltenen Doppelbindung(en) ein organisches Netzwerk aufgebaut wird.

In bevorzugten Ausführungsformen der erfindungsgemäßen Silane sind die Indices b und/oder d und/oder e = 1,

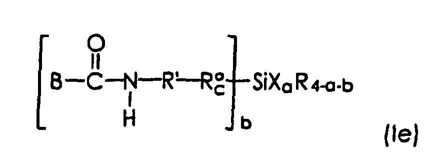

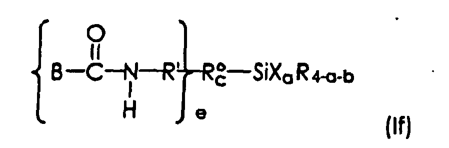

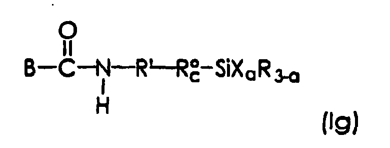

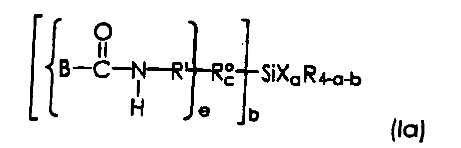

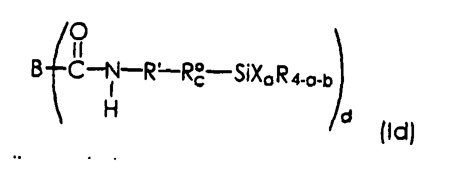

Die Alkyl-Reste sind z.B. geradkettige, verzweigte oder cyclische Reste mit 1 bis 15, insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl. Die WasserstoffAtome der Alkyl-Reste können auch durch andere Atome oder Gruppen substituiert sein.

Die Alkenyl-Reste sind z.B. geradkettige, verzweigte oder cyclische Reste mit 2 bis 15, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl.

Bevorzugte Aryl-Reste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die Alkylen-, Arylen, Alkylenarylen- und Arylenalkylen-Reste leiten sich vorzugsweise von den oben genannten Alkyl- und Aryl-Resten ab. Beispiele für bevorzugte Alkylen-Reste sind -CH₂-, -C₂H₄-, C₃H₆- und -C₄-H₈-.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂. Unter den Halogenen sind Fluor, Chlor und Brom und insbesondere Chlor bevorzugt. Bevorzugt stellt der Rest X eine fluorierte Alkoxy-Gruppe dar.

Für a ≥ 2 bzw. 4-a-b = 2 können die Reste X und R jeweils die selbe oder eine unterschiedliche Bedeutung haben.

Der Rest B leitet sich ab von einer substituierten oder unsubstituierten Verbindung B(COOH)_{d} mit mindestens einer C=C-Doppelbindung, z.B. mit Vinyl-, Allyl-, Acryl-, und/oder Methacryl-Gruppen, und mit 2 bis 50, vorzugsweise mit 2 bis 30 Kohlenstoff-Atomen. Vorzugsweise leitet sich B ab von einer substituierten oder unsubstituierten Verbindung mit zwei oder mehreren Acrylat- oder Methacrylat-Gruppen. Derartige Verbindungen werden im folgenden als (Meth)Acrylate bezeichnet. Falls die Verbindung B(COOH)_{d} substituiert ist, können die Substituenten unter den oben genannten Substituenten ausgewählt sein. Der Index d kann Werte von 1 bis 10 einnehmen, wobei Werte von 1 bis 4 bevorzugt sind.

In weiteren bevorzugten Ausführungsformen leitet sich der Rest B ab von Acrylsäureestern und/oder von Methacrylsäureestern des Trimethylolpropan, des Glycerins, des Pentaerythrit, des Dipentaerythrit, der C₂-C₄-Alkandiole, der Polyethylenglycole, der Polypropylenglycole oder des gegebenenfalls substituierten und/oder alkoxylierten Bisphenol A .

Ohne Einschränkung der Allgemeinheit sind weitere konkrete Beispiele für Reste 8 in der DE 4416857 C1, Seite 4 bis 18, offenbart. Über seine freien Valenzen ist der Rest B jeweils mit einer Amid-Gruppierung -C(O)-N(H)- verknüpft, wobei diese Amid-Gruppierungen jeweils an ein Kohlenstoff-Atom des Restes 8 gebunden sind.

Die erfindungsgemäß einsetzbaren Silane können z.B. dadurch hergestellt werden, dass man d Mole einer Verbindung [{OCN-R'}ₑR°_{c}]_{b}SiXₐR_{4-a-b} unter decarboxylierenden Bedingungen mit b-e Molen einer Verbindung B(COOH)_{d} umsetzt, wobei die Reste und Indices wie in Anspruch 1 definiert sind. Das allgemeine Reaktionsschema sieht wie folgt aus.

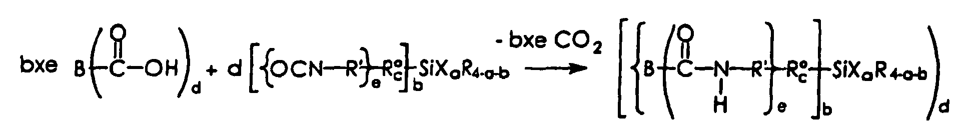

Die Umsetzung erfolgt vorzugsweise zwischen Raumtemperatur und 60°C. Niedrigere oder höhere Temperaturen sind aber ebenfalls möglich. Wenn die Edukte bei der Reaktionstemperatur flüssig sind, kann die Umsetzung auch ohne Lösungsmittel durchgeführt werden. Werden Lösungsmittel verwendet, so sind z.B. THF, Toluol oder Essigester geeignet. Besonders gute Resultate werden erzielt, wenn die eingesetzten Lösungsmittel getrocknet sind. Zur Beschleunigung der Reaktion können auch Katalysatoren eingesetzt werden. Geeignete Katalysatoren sind z.B. tertiäre Amine, wie etwa DABCO (1.4-Diazabicyclo[2.2.2]octan). Wird die Verbindung [{OCN-R'}ₑR°_{c}]_{b}SiXₐR_{4-a-b} im Unterschuss eingesetzt, so weist das resultierende, erfindungsgemäße Silan am Rest B freie Carboxyl-Gruppen auf.

Ohne Einschränkung der Allgemeinheit sind im Folgenden konkrete Beispiele für Reste -R'-R°-SiXₐR₃₋ₐ aufgeführt, wobei n jeweils die Werte 1 bis 10 einnimmt.
-(CH₂)ₙ-Si(CH₃)₂(OC₂H₅), -(CH₂)ₙ-Si(CH₃)(OC₂H₅)₂, -(CH₂)ₙ-Si(OC₂H₅)₃,
-(CH₂)ₙ-Si(C₂H₅)₂(OCH₃), -(CH₂)ₙ-Si(C₂H₅)(OCH₃)₂, -(CH₂)ₙ-Si(OCH₃)₃,
-(CH₂)ₙ-Si(CH₃)₂(OCH₃), -(CH₂)ₙ-Si(CH₃)(OCH₃)₂, -(CH₂)ₙ-Si(C₂H₅)₂(OC₂H₅),
-(CH₂)ₙ-Si(C₂H₅)(OC₂H₅)₂, -(CH₂)ₙ-Si(CH₃)(C₂H₅)(OCH₃),
-(CH₂)ₙ-Si(CH₃)(C₂H₅)(OC₂H₅), -(CH₂)ₙ-Si(CH₃)(OC₂H₅)OCH₃),
-(CH₂)ₙ-Si(C₂H₅)(OC₂H₅)(OCH₃), -(CH₂)ₙ-Si(OC₂H₅)₂(OCH₃),
-(CH₂)ₙ-Si(OC₂H₅)(OCH₃)₂, -(CH₂)ₙ-Si(CH₃)(OC(CH₃)=CH₂)₂,
-(CH₂)ₙ-Si(C₂H₅)(OC(CH₃)=CH₂)₂, -(CH₂)ₙ-Si(CH₃)₂(OC(CH₃)=CH₂),
-(CH₂)ₙ-Si(C₂H₅)₂(OC(CH₃)=CH₂), -(CH₂)ₙ-Si(OCH₃)(OC(CH₃)=CH₂)₂,
-(CH₂)ₙ-Si(OC₂H₅)(OC(CH₃)=CH₂)₂, -(CH₂)ₙ-Si(OCH₃)₂(OC(CH₃)=CH₂),
-(CH₂)ₙ-Si(OC₂H₅)₂(OC(CH₃)=CH₂), -(CH₂)ₙ-Si(C₆H₅)(OC₂H₅)₂,
-(CH₂)ₙ-Si(C₆H₅)(OCH₃)₂, -(CH₂)ₙ-Si(C₆H₅)(OCH₃)(OC₂H₅),
-(CH₂)ₙ-Si(C₆H₅)(OC(CH₃)=CH₂)₂.

Die genannten Silane sind stabile Verbindungen, und können entweder alleine oder zusammen mit anderen hydrolysierbaren, kondensierbaren und/oder polymerisierbaren Komponenten zu Kieselsäurepolykondensaten oder zu Kieselsäureheteropolykondensaten verarbeitet werden, deren endgültige Härtung dann durch Polymerisation der C=C-Doppelbindungen erfolgt. Die genannten Silane können aber auch alleine oder zusammen mit anderen hydrolysierbaren, kondensierbaren und/oder polymerisierbaren Komponenten zu Polymerisaten verarbeitet werden, die durch anschließende hydrolytische Kondensation verfestigt werden können.

Kieselsäure(hetero)polykondensate, die mit organischen Gruppen modifiziert sind, sowie Verfahren zu deren Herstellung (z.B. ausgehend von hydrolytisch kondensierbaren Organosilanen nach dem Sol-Gel-Prozess) sind in großer Zahl bekannt. Derartige Kondensate finden, wie eingangs schon erwähnt, für die verschiedensten Zwecke Verwendung, z.B. als Formmassen, als Lacke für Überzüge, etc. Aufgrund der vielfältigen Anwendungsmöglichkeiten dieser Substanzklasse besteht aber auch ein ständiges Bedürfnis nach Modifizierung der bereits bekannten Kondensate, zum einen um dadurch neue Anwendungsgebiete zu erschließen und zum anderen, um deren Eigenschaften für bestimmte Verwendungszwecke noch weiter zu optimieren.

Die erfindungsgemäß einsetzbaren Silane sind im basischen oder sauren Milieu hydrolysier- und kondensierbar, ohne dass dadurch eine Verknüpfung der C=C-Doppelbindungen erfolgt. Dadurch ist es möglich, die genannten Silane durch hydrolytische Kondensation in ein anorganisch-organisches Netzwerk einzubauen. Die genannten Silane enthalten hydrolysierbare Gruppen X, z.B. Alkoxy-Gruppen, so dass damit ein anorganisches Netzwerk mit Si-O-Si-Einheiten aufgebaut werden kann, während die im Rest B enthaltenen C=C-Doppelbindungen unter Aufbau eines organischen Netzwerkes polymerisiert werden können. Dadurch ist es möglich, organisch modifizierte, hydrolysier- und kondensierbare Silane z.B. in Beschichtungs-, Füll-, Klebe- und Dichtungsmassen, in Formkörpern und Einbettmassen nach dem Stand der Technik durch die genannten Silane zu ersetzen.

Zum Aufbau des anorganischen Netzwerkes werden die erfindungsgemäß einsetzbaren Silane, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A1 2758414, 2758415, 301 1761, 3826715 und 3835968 beschrieben ist.

Zum Aufbau des organischen Netzwerkes werden die genannten Silane, gegebenenfalls unter Zusatz anderer copolymerisierbarer Komponenten, polymerisiert. Die Polymerisation kann z.B. thermisch, photochemisch oder redoxinduziert unter Einsatz von Methoden erfolgen, wie sie z.B. in den DE-A1 3143820, 3826715 und 3835968 beschrieben sind. Eine Kombination dieser Methoden ist ebenfalls möglich.

Als weitere copolymerisierbare Komponenten können Verbindungen zugesetzt werden, die radikalisch und/oder ionisch und/oder kovalent-nucleophil polymerisierbar sind. Radikalisch polymerisierbare Verbindungen, die zugesetzt werden können, sind z.B. solche mit C=C-Doppelbindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie z.B. Spiroorthoester, Spiroorthocarbonate, bicyclische Spiroorthoester, Mono- oder Oligoepoxide oder Spiro-Silane, wie sie aus der DE 4125201 C1 bekannt sind. Es können aber auch Verbindungen zugesetzt werden, die sowohl ionisch als auch radikalisch polymerisierbar sind, wie z.B. Methacryloyl-Spiroorthoester. Diese sind radikalisch über die C=C-Doppelbindung und kationisch unter Ringöffnung polymerisierbar. Die Herstellung dieser Systeme ist z.B. im Journal f. prakt. Chemie, Band 330, Heft 2, 1988, S. 316-318, beschrieben. Desweiteren können die erfindungsgemäß einsetzbaren Silane in Systemen eingesetzt werden, wie sie z.B. in der DE 4405261 beschrieben sind.

Ferner ist es möglich, andere bekannte, Silan-gebundene cyclische Systeme zuzusetzen, die mit einpolymerisiert werden können. Solche Systeme sind z.B. solche, die Epoxide enthalten. Solche Systeme sind bei der Herstellung der Spiro-Silane in der DE 4125201 C1 beschrieben.

Die erfindungsgemäß einsetzbaren Silane stellen hoch reaktive Systeme dar, die zu Poly(hetero)kondensaten führen, die z.B. bei UV-Bestrahlung innerhalb kürzester Zeit zu mechanisch stabilen Überzügen oder Form- bzw. Füllkörpern führen. Die genannten Silane sind über einfache Additionsreaktionen herstellbar und können durch geeignete Auswahl der Ausgangsverbindungen eine variierbare Anzahl reaktiver Gruppen unterschiedlicher Funktionalität aufweisen.

Bei Anwesenheit von zwei oder mehr C=C-Doppelbindungen im Rest B ist die Ausbildung eines dreidimensionalen, organischen Netzwerkes möglich. Über den Abstand zwischen dem Si-Atom und dem Rest B , d.h. über die Kettenlänge, über die Anwesenheit weiterer funktioneller Gruppen in dieser Kette und über die Struktur dieser Kette (linear oder verzweigt), können die mechanischen Eigenschaften (z.B. Flexibilität) und die physikalisch-chemischen Eigenschaften (z.B. Adsorption, Brechzahl, Haftung etc.) der Poly(hetero)kondensate beeinflusst werden. Durch die Ausbildung eines anorganischen Netzwerkes können je nach Art und Anzahl der hydrolysierbaren Gruppen (z.B. Alkoxy-Gruppen) silicon- oder glasartige Eigenschaften der Poly(hetero)kondensate eingestellt werden.

Die erfindungsgemäß einsetzbaren Silane besitzen relativ hohe Molekulargewichte und dementsprechend eine verminderte Flüchtigkeit gegenüber reinen (Meth)Acrylat-Monomeren, so dass die toxische Gefährdung während der Verarbeitung und Applikation geringer ist. Bei der anorganischen und/oder organischen Vernetzung bilden sich Polysiloxane mit nochmals erniedrigter Flüchtigkeit, die damit das Toxizitätsproblem der Acrylatkomponenten völlig beheben.

Berücksichtigt man dann noch die Variationsmöglichkeiten der cokondensierbaren und copolymerisierbaren Komponenten, so wird offenbar, dass über die genannten Silane Kieselsäure(hetero)polykondensate zur Verfügung gestellt werden, die in vielfältiger Weise an vorgegebene Einsatzgebiete angepasst werden können, und die deshalb auf allen Gebieten, auf denen bereits bisher Kieselsäure(hetero)polykondensate eingesetzt werden, Verwendung finden können, aber auch neue Verwendungsmöglichkeiten eröffnen, z.B. auf dem Gebiet der Optik, der Elektronik, der Medizin, der Optoelektronik und der Verpackungsmittel für Lebensmittel etc. Die mit den genannten Silanen gefertigten Kieselsäure(hetero)polykondensate besitzen eine geringe Schrumpfung, eine anorganische Struktur ein günstiges Abrasionsverhalten und hohe Molekulargewichte der Monomere. Auf zusätzliche Reaktivmonomere kann verzichtet werden.

Die erfindungsgemäß einsetzbaren Silane können entweder als solche verwendet werden oder in Zusammensetzungen, die zusätzlich an den Verwendungszweck angepaßte Additive enthalten, z.B. übliche Lackadditive, Lösungsmittel, Füllstoffe, Photoinitiatoren, thermische Initiatoren, Verlaufsmittel und Pigmente. die genannten Silane oder die silanhaltigen Zusammensetzungen eignen sich z.B. zur Herstellung von Beschichtungs-, Füllstoff- oder Bulkmaterialien, von Klebstoffen und Spritzgussmassen, von Fasern, Partikeln, Folien, Haftvermittlern, von Abformmassen und von Einbettmaterialien. Beschichtungen und Formkörper aus den erfindungsgemäßen Silanen haben den Vorteil, daß sie photochemisch strukturierbar sind. Spezielle Anwendungsgebiet sind z.B. die Beschichtung von Substraten aus Metall, Kunststoff, Papier, Keramik etc. durch Tauchen, Gießen, Streichen, Spritzen, elektrostatisches Spritzen, Elektrotauchlackierung etc., der Einsatz für optische, optoelektrische oder elektronische Komponenten, die Herstellung von Füllstoffen, die Herstellung von kratzfesten, abriebfesten Korrosionsschutzbeschichtungen, die Herstellung von Formkörpern, z.B. durch Spritzguss, Formgießen, Pressen, Rapid-Prototyping oder Extrusion, und die Herstellung von Compositen, z.B. mit Fasern, Füllstoffen oder Geweben.

Neben den erfindungsgemäß einsetzbaren Silanen der Formeln Ia, Id, Ie, If, Ig können noch weitere hydrolytisch kondensierbare Verbindungen des Siliciums, des Bors, des Aluminiums, des Phosphors, des Zinns, des Bleis, der Übergangsmetalle, der Lanthaniden oder Actiniden eingesetzt werden. Diese Verbindungen können entweder als solche oder bereits in vorkondensierter Form zur Herstellung der Polykondensate herangezogen werden. Bevorzugt ist es, wenn auf der Basis momomerer Verbindungen mindestens 10 Mol-%, insbesondere mindestens 80 Mol-% und speziell mindestens 90 Mol-%, der zu Herstellung der Kieselsäure(hetero)polykondensate herangezogenen Ausgangsmaterialien Silicium-Verbindungen sind.

Ebenso ist es bevorzugt, wenn den Kieselsäure(hetero)polykondensaten auf der Basis monomerer Verbindungen mindestens 1 Mol-%, z.B. 25 bis 100 Mol-%, insbesondere 50 bis 100 Mol-% und speziell 75 bis 100 Mol-%, an einem oder mehreren der erfindungsgemäßen Silane zugrunde liegen.

Unter den von Silanen der allgemeinen Formeln Ia, Id, Ie, If, Ig verschiedenen, hydrolytisch kondensierbaren Silicium-Verbindungen, die gegebenenfalls eingesetzt werden können, sind solche der allgemeinen Formel (II) besonders bevorzugt,

Rₐ(R"Z')_{b}SiX₄-_{(a+b}) (II)

in der die Reste R,R", X und Z' gleich oder verschieden sind und folgende Bedeutung haben:
- R =: Alkyl, Alkenyl, Aryl, Alkylaryl oder Arylalkyl,
- R" =: Alkylen oder Alkenylen, wobei diese Reste durch Sauerstoff- oder Schwefel-Atome oder -NH-Gruppen unterbrochen sein können,
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
- Z' =: Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-; Epoxy- oder Vinyl-Gruppe,
- a =: 0, 1, 2, oder 3,
- b =: 0, 1, 2, oder 3, mit a+b = 1, 2 oder 3.

Solche Silane sind z.B. in der DE 34 07 087 C2 ausführlich beschrieben.

Unter den von Silanen der allgemeinen Formeln Ia, Id, Ie, If, Ig verschiedenen, hydrolytisch kondensierbaren Silicium-Verbindungen, die gegebenenfalls noch eingesetzt werden können, sind solche der allgemeinen Formel (III) ebenfalls bevorzugt,

{XₙRₖSi[(R²A)ₗ]₄₋₍ₙ₊ₖ₎}ₓB (III)

in der die Reste A, R, R² und X gleich oder verschieden sind und folgende Bedeutung haben.
- A =: O, S, PR', POR', NHC(O)O oder NHC(O)NR', mit R' = Wasserstoff, Alkyl oder Aryl,
- B =: geradkettiger oder verzweigter organischer Rest, der sich von einer Verbindung B' mit mindestens einer (für I = 1 und A = NHC(O)O oder NHC(O)NR') bzw. mindestens zwei C=C-Doppelbindungen und 5 bis 50 Kohlenstoff-Atomen ableitet, mit R'= Wasserstoff, Alkyl oder Aryl,
- R =: Alkyl, Alkenyl, Aryl, Alkylaryl oder Arylalkyl,
- R² =: Alkylen, Arylen oder Alkylenarylen,
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
- n =: 1, 2 oder 3,
- k =: 0, 1 oder 2,
- l =: 0 oder 1,
- x =: eine ganze Zahl, deren Maximalwert der Anzahl von Doppelbindungen in der Verbindung B' minus 1 entspricht, bzw. gleich der Anzahl von Doppelbindungen in der Verbindung B' ist, wenn I = 1 und A für NHC(O)O oder NHC(O)NR' steht.

Solche Silane sind in der DE 40 11 044 und in der EP 91 105 355 beschrieben.

Unter den von Silanen der allgemeinen Formeln Ia, Id, Ie, If, Ig verschiedenen, hydrolytisch kondensierbaren Silicium-Verbindungen, die gegebenenfalls noch eingesetzt werden können, sind solche der allgemeinen Formel (IV) ebenfalls besonders bevorzugt,

YₙSiXₘR₄₋₍ₙ₊ₘ₎ (IV)

in der die Reste X, Y und R gleich oder verschieden sind und folgende Bedeutung haben:
- R =: Alkyl, Alkenyl, Aryl, Alkylaryl oder Arylalkyl,
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
- Y =: ein Substituent, der einen substituierten oder unsubstituierten 1,4,6-Trioxaspiro-[4,4]-nonan-Rest enthält,
- n =: 1, 2 oder 3,
- m =: 1, 2 oder 3, mit n+m ≤ 4.

Diese Spiro-Silane sind über die Reste X hydrolysierbar und über die Reste Y polymerisierbar und sie sind in der DE 4125201 C1 ausführlichst beschrieben.

Unter den von Silanen der allgemeinen Formeln Ia, Id, Ie, If, Ig verschiedenen, hydrolytisch kondensierbaren Silicium-Verbindungen, die gegebenenfalls noch eingesetzt werden können, sind solche der allgemeinen Formel (V) ebenfalls besonders bevorzugt,

B{A-(Z)_{d}-R¹(R²)-R'-SiXₐR_{b}}_{c} (V)

in der die Reste und Indices folgende Bedeutung haben:
- B =: ein geradkettiger oder verzweigter organischer Rest mit mindestens einer C=C-Doppelbindung und 4 bis 50 Kohlenstoff-Atomen;
- X =: Wasserstoff, Halogen, Hydroxy, Alkoxy, Acyloxy, Alkylcarbonyl, Alkoxycarbonyl oder NR"₂;
- R =: Alkyl, Alkenyl, Aryl, Alkylaryl oder Arylalkyl;
- R' =: Alkylen, Arylen, Arylenalkylen oder Alkylenarylen mit jeweils 0 bis 10 Kohlenstoff-Atomen, wobei diese Reste durch Sauerstoff- und Schwefel-Atome oder durch Amino-Gruppen unterbrochen sein können;
- R" =: Wasserstoff. Alkyl oder Aryl;
- A =: O, S oder NH für d = 1 und
Z = CO und
R¹ = Alkylen, Arylen oder Alkylenarylen mit jeweils 1 bis 10 Kohlenstoff-Atomen, wobei diese Reste durch Sauerstoff- und Schwefel-Atome oder durch Amino-Gruppen unterbrochen sein können, und
R² = COOH oder H; oder
- A =: O, S, NH oder COO für d = 1 und
Z = CHR, mit R gleich H, Alkyl, Aryl oder Alkylaryl, und
R¹ = Alkylen, Arylen oder Alkylenarylen mit jeweils 1 bis 10 Kohlenstoff-Atomen, wobei diese Reste durch Sauerstoff- und Schwefel-Atome oder durch Amino-Gruppen unterbrochen sein können, und
R2 = OH; oder
- A =: O, S, NH oder COO für d = 0 und
R¹ = Alkylen, Arylen oder Alkylenarylen mit jeweils 1 bis 0 Kohlenstoff-Atomen, wobei diese Reste durch Sauerstoff- und Schwefel-Atome oder durch Amino Gruppen unterbrochen sein können, und
R² = OH; oder
- A =: S für d = 1 und
Z = CO und
R¹ = N und
R² = H;
- a =: 1, 2 oder 3:
- b =: 0, 1 oder 2, mit a+b = 3:
- c =: 1,2,3 oder 4.

Derartige Silane sind in der DE 44 16 857 C1 beschrieben.

Unter den gegebenenfalls eingesetzten hydrolysierbaren Aluminium-Verbindungen sind diejenigen besonders bevorzugt, die die allgemeine Formel AIR°₃ aufweisen, in der die Reste R°, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den erfindungsgemäß einsetzbaren Silanen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminium-Verbindungen sind Aluminiumalkoxide und - halogenide. In diesem Zusammenhang können als konkrete Beispiele genannt werden

Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃, AlCl(OH)₂.

Bei Raumtemperatur flüssige Verbindungen, wie z.B. Aluminium-sek-butylat und Aluminium-isopropylat, werden besonders bevorzugt.

Geeignete hydrolysierbare Titan- oder Zirkonium-Verbindungen, die gegebenenfalls eingesetzt werden können, sind solche der allgemeinen Formel MX_{y}R_{z}, in der M Ti oder Zr bedeutet, y eine ganze Zahl von 1 bis 4 ist, insbesondere 2 bis 4, z für 0, 1, 2 oder 3 steht vorzugsweise für O, 1 oder 2, und X und R wie im Falle der allgemeinen Formeln in Ia, Id, Ie, If, Ig definiert sind. Die gilt auch für die bevorzugten Bedeutungen. Besonders bevorzugt handelt es sich bei den Verbindungen der Formel MX_{y}R_{z} um solche, in denen y gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure, wobei erfindungsgemäß einsetzbare Silane wie oben definiert die Acryl- bzw. Methacryl-Gruppen aufweisen, ebenfalls zur Komplexierung verwendet werden können. In diesem Fall besteht der große Vorteil der genannten Silane darin, daß zur Komplexierung von Ti- und/oder Zr-Verbindungen keine zusätzlichen Komplexierungsmittel eingesetzt werden müssen.

Konkrete Beispiele für einsetzbare Zr- und Ti-Verbindungen sind die folgenden: TiCl₄, Ti(OC₂H₅)₄, Ti(OC₃H₇)₄, Ti(O-i-C₃H₇)₄, Ti(OC₄H₉)₄, Ti(2-ethylhexoxy)₄, ZrCl₄, Zr(OC₂H₅)_{4'} Zr(OC₃H₇)₄, Zr(O-i-C₃H₇)₄, Zr(OC₄H₉)₄, Zr(2-ethylhexoxy)₄, ZrOCl₂

Weitere hydrolysierbare Verbindungen, die zur Herstellung der Polyheterokondensate eingesetzt werden können, sind z.B. Bortrihologenide und Borsäureester, wie z.B. BCl₃, B(OCH₃)₃ und B(OC₂H₅)₃. Zinntetrahalogenide und Zinntetraalkoxide, wie z.B. SnCl₄ und Sn(OCH₃)₄, und Vanadyl-Verbindungen, wie z.B. VOCl₃ und VO(OCH₃)₃.

Die erfindungsgemäß einsetzbaren Silane müssen für die Weiterverarbeitung zu den Poly(hetero)kondensaten nicht unbedingt isoliert werden. Es ist auch möglich und bevorzugt, in einem Eintopf-Verfahren, diese Silane zunächst herzustellen und dann - gegebenenfalls nach Zusatz weiterer hydrolysierbarer Verbindungen - hydrolytisch zu kondensieren. Diese Reaktionsführung stellt einen großen Vorteil der genannten Silane und deren Verarbeitung zu Polykondensaten dar.

Wie bereits erwähnt, kann die Herstellung der Poly(hetero)kondensate in auf diesem Gebiet üblicher Art und Weise erfolgen. Werden praktisch ausschließlich Silicium-Verbindungen eingesetzt, kann die hydrolytische Kondensation in den meisten Fällen dadurch erfolgen, dass man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und dass man die resultierende Mischung daraufhin einige Zeit (ein bis mehrere Stunden) rührt.

Bei Anwesenheit reaktiver Verbindungen des Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Wasserzugabe vor allem von der Reaktivität der eingestzten Ausgangsverbindungen ab. So kann man z.B. die gelösten Ausgangsverbindungen langsam zu einem Überschuss an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage.

Werden Spiro-Silone zur Herstellung der Poly(hetero)kondensate eingesetzt, so wird die Hydrolyse bevorzugt in einem bzgl. der Spiro-Silone basischen Milieu durchgeführt. Dies wird entweder durch ein basisches Lösungsmittel, wie z.B. durch Triethylamin, erzeugt, oder durch Zugabe von basichen Hydrolyse- und Kondensationskatalysatoren, wie z.B. von NH₃, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich noch den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Poly(hetero)kondensat kann entweder als solches oder nach teilweiser oder nahezu vollständiger Entfernung des verwendeten Lösungsmittels weiterverarbeitet werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Poly(hetero)kondensat zu stabilisieren. Zu diesem Zweck kann die Reaktionsmischung z.B. im Vakuum bei leicht erhöhter Temperatur so weit eingedickt werden, daß sie noch problemlos mit einem anderen Lösungsmittel aufgenommen werden kann.

Sollen diese Poly(hetero)kondensate als Lacke für die Beschichtung (z.B. von Kunststoffen wie etwa PVC. PC. PMMA, PE, PS etc., von Glas, Papier, Holz, Keramik, Metall usw.) eingesetzt werden, so können diesen spätestens vor der Verwendung gegebenenfalls noch übliche Lackadditive zugegeben werden, wie z.B. Färbemittel (Pigmente oder Farbstoffe), Füllstoffe, Oxidotionsinhibitoren, Flammschutzmittel, Verlaufsmittel, UV-Absorber, Stabilisatoren oder dergleichen. Auch Zusätze zur Erhöhung der Leitfähigkeit (z.B. Graphit-Pulver, Silber-Pulver etc.) verdienen in diesem Zusammenhang Erwähnung. Im Falle der Verwendung als Formmasse kommt insbesondere die Zugabe von anorganischen und/oder organischen Füllstoffen in Frage, wie z.B. organische und anorganische Partikel, (Glas-) Fasern, Mineralien etc.

Die endgültige Härtung der Poly(hetero)kondensate erfolgt nach Zugabe geeigneter Initiatoren thermisch, redox-induziert oder photochemisch, wobei auch mehrere Härtungsmechanismen parallel und/oder nacheinander ablaufen können. Dabei werden im Zuge der Polymerisation die C=C-Doppelbindungen verknüpft und es wird das organische Netzwerk aufgebaut. Aufgrund der relativ hohen Molekulargewichte der erfindungsgemäßen Silane erfahren diese bei der Härtung nur eine geringe Volumenschrumpfung.

Es ist auch möglich, dem Poly(hetero)kondensat vor der endgültigen Härtung, also vor der Polymerisation weitere ionisch und/oder radikalisch und/oder kovalent-nucleophil copolymerisierbare Komponenten zuzusetzen. Radikalisch copolymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen verläuft. Ionisch copolymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide oder Spirosilane der allgemeinen Formel IV. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt die Härtung des Poly(hetero)kondensates photochemisch, so werden diesem Photoinitiatoren zugesetzt, bei thermischer Härtung thermische Initiatoren und bei redox-induzierter Härtung Starter-Aktivator-Systeme.

Der Initiator kann in üblichen Mengen zugegeben werden. So kann z.B. einer Mischung, die 30 bis 50 Gew.-% Feststoff (Polykondensat) enthält, Initiatoren in einer Menge von z.B. 0.5 bis 5 Gew.-%, insbesondere von 1 bis 3 Gew.-%, bezogen auf die Mischung zugesetzt, werden.

Werden zur Herstellung der Poly(hetero)kondensate neben den erfindungsgemäß einsetzbaren Silanen weitere Komponenten eingesetzt, die reaktive Doppelbindungen enthalten, wie z.B. Silane gemäß der allgemeinen Formel (III), so kann über diese Doppelbindungen ebenfalls eine Polymerisation ablaufen, die thermisch und/oder photochemisch und/oder redox initiiert sein kann.

Als Photoinitiatoren können z.B. die im Handel erhältlichen eingesetzt werden. Beispiele hierfür sind Irgacure 184 (1-Hydroxycyclohexylphenylketon), Irgacure 500 (1-Hydroxycyclohexylphenylketon/Benzophenon), und andere von Ciba-Geigy erhältliche Photoinitiatoren vom Irgacure-Typ; Darocure 1173, 1116. 1398, 1174 und 1020 (erhältlich von der Firma Merck), Benzophenon, 2-Chlorthioxanthon, 2-Methylthioxanthon, 2-Iso-propylthioxanthon, Benzoin, 4.4'-Dimethoxybenzoin etc. Erfolgt die Härtung mit sichtbaren Licht, wie z.B. im Dentalbereich, so kann als Initiator z.B. Compherchionon eingesetzt werden.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Als Starter/Aktivator-Systeme können hierfür übliche eingesetzt werden, wie z.B. aromatische Amine (z.B. N,N-Bis-(2-hydroxy-ethyl)-p-toluidin) als Aktivatoren oder als Starter z.B. Dibenzoylperoxid, wobei über deren Konzatration bzw. deren Konzentrationsverhältnis die Härtungszeit entsprechend dem jeweiligen Anwendungsfall eingestellt werden kann. Weitere Amine sind z.B. der DE 4310733 zu entnehmen.

Bei kovalent-nucleophiler Härtung werden als Initiatoren z.B. Verbindungen mit mindestens einer Amino-Gruppe zugesetzt. Geeignete Amine sind z.B. der DE 4405261 zu entnehmen.

Ein mit einem Initiator versehener Lack (Poly(hetero)kondensat) auf der Basis der erfindungsgemäß einsetzbaren Silane kann dann für Beschichtungen von Substraten eingesetzt werden. Für diese Beschichtung können übliche Beschichtungsverfahren angewendet werden, z.B. Tauchen, Fluten, Gießen, Schleudern, Walzen, Spritzen, Aufstreichen, elektrostatisches Spritzen und Elektrotauchlackierung. Erwähnt werden soll hier noch, dass der Lack nicht notwendigerweise lösungsmittelhaltig sein muss. Insbesondere bei Verwendung von Ausgangssubstanzen (Silanen) mit zwei Alkoxy-Gruppen am Si-Atom kann auch ohne Zusatz von Lösungsmitteln gearbeitet werden.

Vor der Härtung lässt man vorzugsweise den aufgetragenen Lack abtrocknen. Danach kann er, abhängig von der Art des Initiators, redox-induziert, thermisch oder photochemisch in an sich bekannter Weise gehärtet werden. Selbstverständlich sind auch Kombinationen von Aushärtungsmethoden möglich.

Erfolgt die Härtung des aufgetragenen Lackes durch Bestrahlen kann es sich von Vorteil erweisen, nach der Strahlungshärtung eine thermische Härtung durchzuführen, insbesondere um noch vorhandenes Lösungsmittel zu entfernen oder um nach weitere reaktive Gruppen in die Härtung miteinzubeziehen.

Obwohl in den Poly(hetero)kondensaten auf der Basis der erfindungsgemäß einsetzbaren Silane bereits polymerisierbare Gruppen vorhanden sind, kann es sich in bestimmten Fällen als vorteilhaft erweisen, diesen Kondensaten vor oder bei ihrer Weiterverarbeitung (Härtung) noch weitere Verbindungen (vorzugsweise rein organischer Natur) mit z.B. ungesättigten Gruppen zuzugeben. Bevorzugte Beispiele für derartige Verbindungen sind Acrylsäure und Methacrylsäure sowie davon abgeleitete Verbindungen, insbesondere Ester von vorzugsweise einwertigen Alkoholen (z.B. C₁₋₄-Alkanolen), (Meth)Acrylnitril, Styrol und Mischungen derselben. Im Fall der Verwendung der Poly(hetero)kondensate zur Herstellung von Beschichtungslacken können derartige Verbindungen gleichzeitig als Lösungs- bzw. Verdünnungsmittel wirken.

Die Herstellung von Formkörpern bzw. Formmassen aus Poly(hetero)kondensaten auf der Basis der erfindungsgemäßen Silane kann mit jeder auf diesem Gebiet gebräuchlichen Methode erfolgen, z.B. durch Pressen, Spritzguss, Formgießen, Extrusion etc. Auch zur Herstellung von Kompositmaterialien (z.B. mit Glasfaserverstärkung) sind die Poly(hetero)kondensate auf der Basis der erfindungsgemäß einsetzbaren Silane geeignet.

Eine weitere Anwendungsmöglichkeit finden die erfindungsgemäß einsetzbaren Silane bei der Herstellung von hydrolytisch kondensierbaren Polymerisaten. Dazu werden die genannten Silane alleine oder zusammen mit anderen radikalisch und/oder ionisch und/oder kovalent-nucleophil copolymerisierbaren Komponenten polymerisiert, wobei die endgültige Härtung dann durch hydrolytische Kondensation über die hydrolysierbaren Gruppen der genannten Silane und eventuell weiterer, hydrolysierbarer Komponenten erfolgt. In diesem Fall wird zuerst durch Polymerisation das organische Netzwerk aufgebaut und dann durch hydrolytische Kondensation das anorganische.

Die Herstellung der Polymerisate erfolgt durch radikalische und/oder ionische und/oder kovalent-nucleophile Polymerisation einer oder mehrerer C=C-Doppelbindungen-haltiger Verbindungen und gegebenenfalls anderer, radikalisch und/oder ionisch und/oder kovalent-nucleophil polymerisierbarer Verbindungen redox-induziert und/oder durch Einwirken von Wärme und/oder von elektromagnetischer Strahlung, gegebenenfalls in Anwesenheit eines oder mehrerer Initiatoren und/oder eines Lösungsmittels, und ist dadurch gekennzeichnet, dass, auf der Basis monomerer Verbindungen, 1 bis 100 Molprozent der C=C-Doppelbindungen-haltiger Verbindungen aus den erfindungsgemäß einsetzbaren Silanen der allgemeinen Formeln Ia, Id, Ie, If, Ig ausgewählt werden.

Es ist aber auch möglich, den erfindungsgemäß einsetzbaren Silanen vor der Polymerisation weitere ionisch und/oder radikalisch und/oder kovalent-nucleophil copolymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie etwa Spiroorthoester, Spiroorthocarbonate, bicyclische Spiroorthoester, Mono- oder Oligoepoxide oder Spiro-Silane der allgemeinen Formel IV. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Ferner können den erfindungsgemäß einsetzbaren Silanen vor der Polymerisation weitere hydrolysierbare und polymerisierbare Verbindungen des Siliciums zugesetzt werden, gegebenenfalls in vorkondensierter Form, die dann mit einpolymerisiert werden. Solche Silicium-Verbindungen leiten sich z.B. von Epoxid-haltigen Silanen ab, sind deshalb kationisch polymerisierbar und werden u.a. für die Herstellung der Spiro-Silane gemäß der DE 4125201 C1 eingesetzt. Diese Systeme sind in der DE 4125201 C1 beschrieben.

Es können aber auch Silicium-Verbindungen eingesetzt werden, die sich z.B. von solchen der allgemeinen Formel (III) ableiten und radikalisch polymerisierbar sind. Diese Systeme sind bei der Herstellung der Poly(hetero)kondensate bereits näher beschrieben worden.

Die Polymerisation erfolgt redox-induziert und/oder thermisch und/oder photochemisch nach Zugabe geeigneter Initiatoren. Dabei werden z.B. im Zuge einer radikalischen Polymerisation C=C-Doppelbindungen verknüpft und gegebenenfalls im Zuge einer kationischen Polymerisation Ringe von Spiro-Gruppen und gegebenenfalls weitere radikalisch polymerisierbare Ringe geöffnet. Dadurch wird das organische Netzwerk aufgebaut. Überraschenderweise wurde festgestellt, dass sich im Laufe dieser Polymerisation das Volumen der Reaktionsmasse nicht oder nur geringfügig ändert. Verantwortlich dafür ist das relativ hohe Molekulargewicht der erfindungsgemäß einsetzbaren Silane.

Erfolgt die Polymerisation photochemisch, so werden der Reaktionsmasse Photoinitiatoren zugesetzt, erfolgt die Polymerisation thermisch, so werden thermische Initiatoren zugesetzt und bei redox-induzierter Polymerisation Starter/Aktivator-Systeme.

Wurden den erfindungsgemäß einsetzbaren Silanen Komponenten mit Spiro-Gruppen zugesetzt, so kann über diese ebenfalls eine Polymerisation ablaufen, die thermisch oder photochemisch initiierbar ist. Als Photoinitiatoren hierfür können z.B. die im Handel erhältlichen eingesetzt werden.

Der Initiator kann in üblichen Mengen zugegeben werden. So kann z.B. einer Mischung, die 30 bis 50 Gew.-% Feststoff enthält, Initiator in einer Menge von z.B. 0.5 bis 5 Gew.-%, insbesondere von 1 bis 3 Gew.-%, bezogen auf die Mischung zugesetzt, werden.

Das auf diese Weise erhaltene Polymerisat kann man nun zum Aufbau des anorganischen Netzwerkes, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Lösungsmittels, hydrolytisch kondensieren. Die Polymerisate enthalten hydrolysierbare Gruppen X, z.B. Alkoxy-Gruppen, so daß damit ein anorganisches Netzwerk (Si-O-Si-Einheiten) aufgebaut werden kann.

Unter den gegebenenfalls eingesetzten hydrolysierbaren Verbindungen des Siliciums sind solche der allgemeinen Formel (II), gegebenenfalls in vorkondensierter Form, bevorzugt. Diese Systeme wurden bereits bei der Herstellung der Poly(hetero)kondensate ausführlich beschrieben.

Unter den gegebenenfalls eingesetzten hydrolysierbaren Aluminium-Verbindungen sind diejenigen besonders bevorzugt, die die allgemeine Formel AIR°₃ aufweisen, und geeignete hydrolysierbare Titan- oder Zirkonium-Verbindungen, die gegebenenfalls eingesetzt werden können, sind solche der allgemeinen Formel MX_{y}R_{z}. Auch diese Systeme wurden bereits bei der Herstellung der Poly(hetero) kondensate ausführlich abgehandelt.

Weitere hydrolysierbare Verbindungen, die dem Polymerisat zugesetzt werden können, sind z.B. Bortrihatogenide und Borsäureester, wie z.B. BCl₃, B(OCH₃)₃ und B(OC₂H₅)₃. Zinntetrahalogenide und Zinntetraalkoxide, wie z.B. SnCl₄ und Sn(OCH₃)₄, und Vanadyl-Verbindungen, wie z.B. VOCl₃ und VO(OCH₃)₃.

Auch hier kann, wie bereits erwähnt, die hydrolytische Kondensation in auf diesem Gebiet üblicher Art und Weise erfolgen. Die hydrolytische Kondensation kann in den meisten Fällen dadurch erfolgen, daß man dem zu hydrolysierenden Polymerisat, das entweder als solches oder gelöst in einem geeigneten Lösungsmittel vorliegt, das erforderliche Wasser bei Raumtemperatur oder unter leichter Kühlung direkt zugibt, vorzugsweise unter Rühren und in Anwesenheit eines Hydrolyse- und Kondensationskatalysators.

Bei Anwesenheit reaktiver Verbindungen von Al, Ti oder Zr empfielt sich auch hier in der Regel eine stufenweise Zugabe des Wassers. Unabhängig von der Reaktivität der anwesenden Verbindungen erfolgt die Hydrolyse auch hier in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. das gelöste Polymerisat langsam zu einem Überschuß an Wasser tropfen oder man gibt Wasser in einer Portion oder portionsweise dem gegebenenfalls gelösten Polymerisat zu. Es kann auch nützlich sein, das Wasser nicht als solches zuzugeben, sondern mit Hilfe von wasserhaltigen organischen oder anorganischen Systemen in das Reaktionssystem einzutragen.

Mit den erfindungsgemäß einsetzbaren, mehrfach funktionellen Silanen stehen Ausgangsverbindungen zur Verfügung, die die Herstellung von anorganisch-organischen Verbundpolymeren mit den unterschiedlichsten und in weiten Bereichen einstellbaren Eigenschaften bzw. die Modifikation von bestehenden Verbundpolymeren ermöglichen. Der Einsatz solcher Materialien erstreckt sich auf die verschiedensten Zwecke und unter anderem auf die Verwendung als Bulkmaterialien, Komposite, Klebstoffe, Verguss- und Dichtungsmassen, Beschichtungsmaterialien, Haftvermittler und Bindemittel für keramische Partikel (keramische Formgebungsverfahren), zur Herstellung bzw. Primung von Füllstoffen und Fasern, von Schleifscheiben, und Einsatz im Reaktionsextruder. Für die organische Polymerisation kommt die photochemisch, die thermisch sowie die chemisch (2-Komponenten, anaerob, Redox, etc.) induzierte Umsetzung in Frage. Die Kombination von Selbsthärtung mit z.B. photoinduzierter bzw. thermischer Härtung ist ebenfalls möglich.

Ein besonderer Vorteil der erfindungsgemäß einsetzbaren Silane z.B. gegenüber Silanen der DE 401 1044 C2 liegt in deren ausgezeichneter chemischen und thermischen Stabilität. Die Amid-Gruppe der genannten Silane ist im Vergleich zur Urethan-Gruppe der Silane der DE 4011044 C2 chemisch und thermisch stabiler.

An Hand eines Ausführungsbeispiels wird die Erfindung näher erläutert.

### 1. Synthese eines Carbonsäure-modifizierten Dimethacrylats

Zunächst wird nach üblichen Methoden gemäß folgendem Reaktionsschema ein Carbonsäure-modifiziertes Dimethacrylat hergestellt.

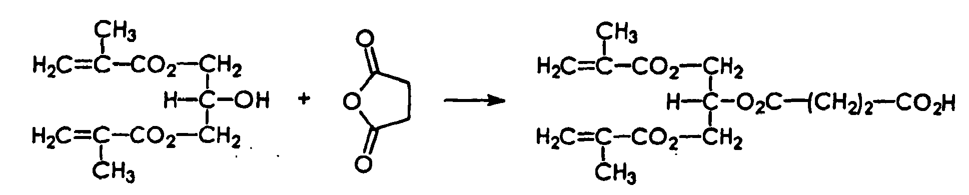

### 2. Synthese eines Silans

Zur Vorlage von 19.8 g (0.08 mol) 3-Isocyanatopropyltriethoxysilan und 0.45 g (4.0 mol) Diazabicyclooctan (DABCO) als Katalysator werden unter trockener Atmosphäre 26.2 g (0.08 mol) des Carbonsäure-modifizierten Dimethacrylats (aus 1.) bei 50 °C zugetropft. Die Umsetzung kann über die Abnahme der Isocyanat-Bande (ν_{(NCO)} = 2273 cm⁻¹) und über die Entstehung und Zunahme der der gebildeten Amid-Gruppe zuzuordnenden Bande im IR-Spektrum verfolgt werden. Nach beendeter Zugabe und weiterem Rühren bei 50 °C zur Vervollständigung der Reaktion wird das gewünschte Produkt nach üblicher Aufarbeitung in Form einer klaren, farblosen Flüssigkeit erhalten.

IR-Daten :
ν_{(NH↔Amid)} ≈ 3324 cm⁻¹
ν_{(C=O↔ Amid)} ≈ 1657 cm⁻¹
ν_{(C=C↔Methacrylat)} ≈ 1655 cm⁻¹
ν_{(C=O↔Ester, Methacrylat)} ≈ 1726 cm⁻¹

### 3. Hydrolyse und Kondensation, Synthese des Silan-Polykondensats aus 2.

80 mmol des Produkts aus 2. wird in 80 ml Essigester zur Hydrolyse und Kondensation der Ethoxy-Gruppen mit 8.64 g Wasser ( + Katalysator) versetzt und bei RT gerührt. Nach vollständigem Umsatz (Nachweis über Wassertitration) kann die nach Aufarbeitung klare Lösung nach Zusatz eines Initiators z.B. zur Beschichtung (mit anschließender Härtung, d.h. Polymerisation der Methacrylat-Gruppen) von beliebigen Substraten verwendet werden.

### 4. Hydrolyse und Kondensation, Synthese des Polykondensats

80 mmol des Produkts aus 2. wird in 80 ml Essigester zur Hydrolyse und Kondensation der Ethoxy-Gruppen mit 8.64 g Wasser ( + Katalysator) versetzt und bei RT gerührt. Nach vollständigem Umsatz (Nachweis über Wassertitration) und Zugabe von 27 mmol Dodecandioldimethacrylat kann die nach Aufarbeitung klare Lösung nach Zusatz eines Initiators z.B. zur Beschichtung (mit anschließender Härtung, d.h. Polymerisation der Methacrylat-Gruppen) von beliebigen Substraten verwendet werden.
Nach Entfernen des Lösungsmittels wird ein flüssiges Harz erhalten (lösungsmittelfreie Applikation ist somit möglich), das nach Zusatz eines Initiators und Härtung (d.h. Polymerisation der Methacrylat-Gruppen) z.B. zur Herstellung von Formkörpern verwendet werden kann.

### 5. Härtung, Polymerisation der Doppelbindungen

In 10 g des Harzes aus 4. werden 1 % Lucrin (Photoinitiator) gelöst und in eine Stäbchenform (2×2×25 mm³) gegeben. Die Methacrylat-Gruppen werden im Rahmen eine photoinduzierten radikalischen Polymerisation umgesetzt, wobei das Harz aushärtet. Dazu wird beidseitig mit einem Punktstrahler belichtet. Mittels 3-Punktbiegeversuch wird das E-Modul sowie die Bruchfestigkeit der resultierenden Stäbchen bestimmt.
E-Modul = 2.66 Gpa
Bruchfestigkeit = 118 MPa

Es resultieren somit ausgezeichnete mechanische Daten, weshalb die erfindungsgemäß einsetzbaren Silane z.B. zur Herstellung von Matrixsystemen für dentale Komposite bestens geeignet sind.

## Patentansprüche

1. Verwendung von hydrolysierbaren und polymerisierbaren organisch modifizierten Silanen der folgenden Formeln 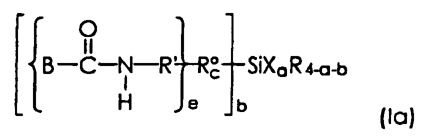 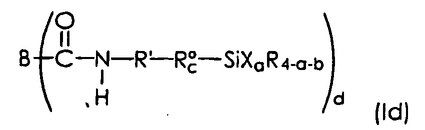 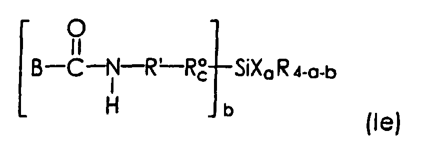 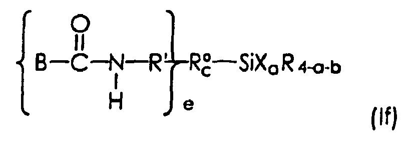 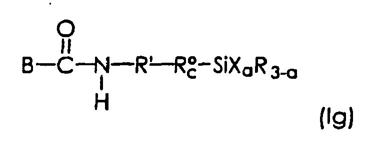 in denen die Reste und Indices folgende Bedeutung haben:
B = geradkettiger oder verzweigter organischer Rest mit 2 bis 50 Kohlenstoff-Atomen und mit mindestens einer C=C-Doppelbindung, wobei die -CO-NH-Gruppe an ein Kohlenstoff-Atom des Restes B gebunden ist und B keine Norbornen-, Bicyclo[2.2.2]oct-2-en- oder 7-Oxabicyclo[2.2.1] hept-2-en-Gruppe enthält;
R = gegebenenfalls substituiertes Alkyl, Alkenyl, Aryl, Alkylaryl oder Arylalkyl mit jeweils 1 bis 15 Kohlenstoff-Atomen, wobei diese Reste Sauerstoff- und/oder Schwefel- und/oder Stickstoff-Atome enthalten können;
R° = gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können;
R' = gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können,
X = Wasserstoff, Halogen, Hydroxy, Alkoxy, Acyloxy, Alkylcarbonyl, Alkoxycarbonyl oder NR"₂, mit R" gleich Wasserstoff, Alkyl oder Aryl;
a = 1,2 oder 3;
b = 1, 2 oder 3, mit a+b = 2, 3 oder 4;
c = 0 oder 1;
d = 1, 2, 3, 4, 5, 6, 7, 8, 9 oder 10;
e = 1, 2, 3 oder4, mit e = 1 für c = 0,
zur Herstellung von organisch modifizierten Kieselsäurepolykondensaten oder von organisch modifizierten Kieselsäureheteropolykondensaten, für alle Zwecke, ausgenommen der Verwendung der hergestellten, organisch modifizierten Kieselsäurepolykondensate oder der organisch modifizierten Kieselsäureheteropolykondensate in Dentalmaterialien, wobei die genannten Kondensate durch hydrolytische Kondensation einer oder mehrerer hydrolytisch kondensierbarer Verbindungen des Siliciums und gegebenenfalls anderer Elemente aus der Gruppe B, Al, P, Sn. Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit erzeugt werden, wobei auf der Basis monomerer Verbindungen 1 bis 100 Mol-Prozent der hydrolytisch kondensierbaren Verbindungen aus den genannten Silanen der allgemeinen Formeln Ia, Id, Ie, If, Ig ausgewählt werden.

2. Verwendung nach Anspruch, **dadurch gekennzeichnet, dass** in der allgemeinen Formel Ia, Id, Ie, If oder Ig die Reste und Indices die folgende Bedeutung haben:
X = (C₁-C₄)-Alkoxy, bevorzugt Methoxy und Ethoxy, oder Halogen, bevorzugt Cl;
R = (C₁-C₄)-Alkyl, bevorzugt Methyl und Ethyl;
R' = (C₁-C₄)-Alkylen, bevorzugt Methylen, Ethylen und Propylen;
B, R°, a, b, c, d und e sind wie in Anspruch 1 definiert.

3. Verwendung nach einem oder mehreren der Ansprüche 1 oder 2 **dadurch gekennzeichnet, dass** B in der allgemeinen Formel Ia, Id, Ie, If oder Ig einen substituierten oder unsubstituierten organischen Rest mit einer oder mehreren Acrylat- und/oder Methacrylat-Gruppen darstellt.

4. Verwendung nach Anspruch 3, **dadurch gekennzeichnet, dass** sich der Rest B ableitet von Acrylsäureestern und/oder von Methacrylsäureestern des Trimethylolpropan, des Glycerins, des Pentaerythrit, des Dipentaerythrit, der C₂-C₄-Alkandiole, der Polyethylenglycole, der Polypropylenglycole oder des gegebenenfalls substituierten und/oder alkoxylierten Bisphenol A.

5. Verwendung nach Anspruch 1, worin in den Formeln Ia oder Ie b = 2 oder 3 ist.

6. Verwendung nach einem der voranstehenden Ansprüche, **dadurch gekennzeichnet, dass** man dem Polykondensat einen oder mehrere Initiatoren zusetzt und dass man das Polykondensat thermisch und/oder photochemisch und/oder redoxinduziert härtet.

7. Verwendung nach einem der voranstehenden Ansprüche, **dadurch gekennzeichnet, dass** man dem Polykondensat vor der Härtung eine oder mehrere radikalisch und/oder ionisch und/oder kovalent-nucleophil polymerisierbare Komponenten zusetzt.

8. Verwendung nach einem der voranstehenden Ansprüche zur Herstellung von Bulkmaterialien von Überzugslacken, von Kompositen, von Klebstoffen, von Verguss- und Dichtungsmassen, von Beschichtungsmaterialien, von Beschichtungen, von Schleifmitteln, von Haftvermittlern, von Bindemitteln, von Füllstoffen, von Fasern, von Folien, von Schleifscheiben und von (Contact) Linsen sowie zur Verwendung im Reaktionsextruder und zur Primung von Füllstoffen und Fasern.

9. Verwendung nach einem der voranstehenden Ansprüche für optische, elektrische oder elektronische Zwecke.

10. Verwendung von organisch vernetzten oder organisch vernetzbaren Kieselsäurepolykandensaten oder solchen Kieselsäureheteropolykondensaten, erhalten durch hydrolytische Kondensation und ggf. organische Vernetzung mindestens eines hydrolysierbaren und polymerisierbaren, organisch modifizierten Silans der folgenden Formeln 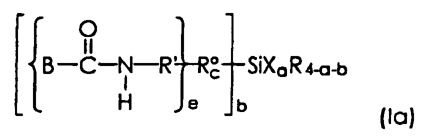 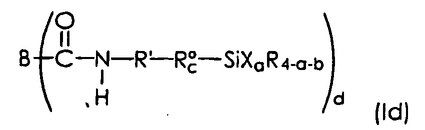 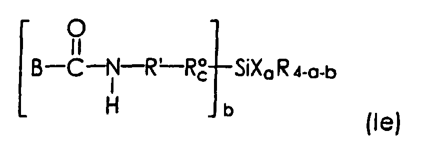 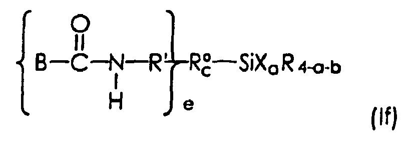 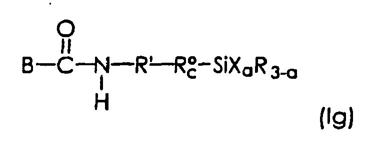 in denen die Reste und Indices folgende Bedeutung haben:
B = geradkettiger oder verzweigter organischer Rest mit 2 bis 50 Kohlenstoff-Atomen und mit mindestens einer C=C-Doppelbindung, wobei die -CO-NH-Gruppe an ein Kohienstoff-Atom des Restes B gebunden ist und B keine Norbornen-, Bicyclo[2.2.2]oct-2-en- oder 7-Oxabicyclo[2.2.1]hept-2-en-Gruppe enthält;
R = gegebenenfalls substituiertes Alkyl, Alkenyl, Aryl, Alkylaryl oder Arylalkyl mit jeweils 1 bis 15 Kohlenstoff-Atomen, wobei diese Reste Sauerstoff- und/oder Schwefel- und/oder Stickstoff-Atome enthalten können;
R° = gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können;
R' = gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können,
X = Wasserstoff, Halogen, Hydroxy, Alkoxy, Acyloxy, Alkylcarbonyl, Alkoxycarbonyl oder NR"₂, mit R" gleich Wasserstoff, Alkyl oder Aryl;
a = 1, 2 oder 3;
b = 1, 2 oder 3, mit a+b = 2, 3 oder 4;
c = 0 oder 1;
d = 1, 2, 3, 4, 5, 6, 7, 8, 9 oder 10;
e = 1, 2, 3 oder 4, mit e = 1 für c = 0,
ggf. in Gegenwart weiterer Bestandteile,
in Zusammensetzungen für alle Zwecke, mit Ausnahme von Dentatmaterialien sowie von Verfahren zur chirurgischen oder therapeutischen Behandlung des menschlichen oder tierischen Körpers sowie Diagnostizierverfahren, die am menschlichen oder tierischen Körper vorgenommen werden.

11. Verwendung nach Anspruch 10, **dadurch gekennzeichnet, daß** die Zusammensetzungen als Füllstoffe, Bulkmaterialien, Klebstoffe, Spritzgussmassen, Vergussmassen, Dichtungsmassen, Folien, Fasern, Partikel, Schleifmittel, (Kontakt-)Linsen, Haftvermittler, Bindemittel, Einbettmoterialien, Beschichtungsmassen oder Beschichtungen eingesetzt werden, insbesondere für optische, optoelektrische oder elektronische Zwecke.

12. Verwendung noch einem der Ansprüche 10 oder 11, worin in den Formeln (Ia), und (Ie) b=2 oder 3 ist.

13. Verwendung nach einem der Ansprüche 10 bis 12, **dadurch gekennzeichnet, dass** in den Silanen mit der allgemeinen Formel Ia, Id, le, If oder Ig die Reste und Indices die folgende Bedeutung haben:
X = (C₁-C₄)-Alkoxy, bevorzugt Methoxy und Ethoxy, oder Halogen, bevorzugt Cl;
R = (C₁-C₄)-Alkyl, bevorzugt Methyl und Ethyl;
R' = (C₁-C₄)-Alkylen, bevorzugt Methylen, Ethylen und Propylen;
B, R°, a, b, c, d und e sind wie in Anspruch 1 definiert.

14. Verwendung nach einem der Ansprüche 10 bis 13, **dadurch gekennzeichnet, dass** B in den Silanen mit der allgemeinen Formel Ia, Id, Ie, If oder Ig einen substituierten oder unsubstituierten organischen Rest mit einer oder mehreren Acrylat- und/oder Methacrylat-Gruppen darstellt.

15. Verwendung nach Anspruch 14, **dadurch gekennzeichnet, dass** sich der Rest B ableitet von Acrylsäureestern und/oder von Methacrylsäureestern des Trimethylolpropan, des Glycerins, des Pentaerythrit, des Dipentaerythrit, der C₂-C₄-Alkandiole, der Polyethylenglycole, der Polypropylenglycole oder des gegebenenfalls substituierten und/oder alkoxylierten Bisphenol A.

16. Verwendung noch einem der Ansprüche 10 bis 15, **dadurch gekennzeichnet, dass** dem Polykondensat zur thermischen und/oder photochemischen und/oder redoxinduzierten Härtung ein oder mehrere Initiatoren zugesetzt sind.

17. Verwendung nach einem der Ansprüche 10 bis 16, **dadurch gekennzeichnet, dass** das Polykondensat eine oder mehrere radikalisch und/oder ionisch und/oder kovalent-nucleophil polymerisierbare oder einpolymerisierte Komponenten enthält.

18. Hydrolysierbare und polymerisierbare organisch modifizierte Silane der folgenden Formeln 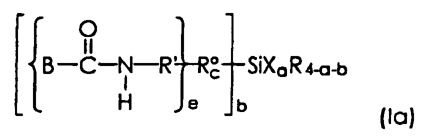 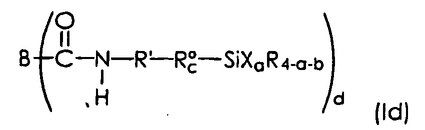 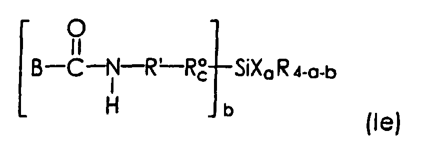 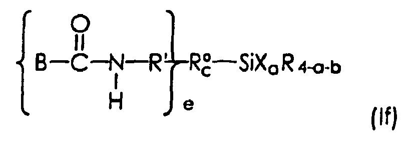 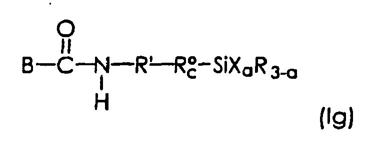 in denen die Reste und Indices folgende Bedeutung haben:
B = geradkettiger oder verzweigter organischer Rest mit 2 bis 50 Kohlenstoff-Atomen und mit mindestens einer C=C-Doppelbindung, wobei die -CO-NH-Gruppe an ein Kohlenstoff-Atom des Restes B gebunden ist und B keine Norbornen-, Bicyclo[2.2.2]oct-2-en- oder 7-Oxabicyclo[2.2.1]hept-2-en-Gruppe enthält;
R = gegebenenfalls substituiertes Alkyl, Alkenyl, Aryl, Alkylaryl oder Arylalkyl mit jeweils 1 bis 15 Kohlenstoff-Atomen, wobei diese Reste Sauerstoff- und/oder Schwefel- und/oder Stickstoff-Atome enthalten können;
R° = gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können;
R' = gegebenenfalls substituiertes Alkylen, Alkenylen, Arylen, Alkylenarylen oder Arylenalkylen mit jeweils 1 bis 15 Kohlenstoff-Atomen, wobei diese Reste Sauerstoff- und/oder Schwefel- und/oder Stickstoff-Atome enthalten können,
X = Wasserstoff, Halogen, Hydroxy, Alkoxy, Acyloxy, Alkylcarbonyl, Alkoxycarbonyl oder NR"₂, mit R" gleich Wasserstoff, Alkyl oder Aryl;
a = 1, 2 oder 3;
b = 2 oder 3, mit a+b = 2, 3 oder 4;
c = 0 oder 1;
d = 1, 2, 3, 4, 5, 6, 7, 8, 9 oder 10;
e = 1, 2, 3 oder4, mit e = 1 für c = 0.

19. Silane nach Anspruch 18, **dadurch gekennzeichnet, dass** in der allgemeinen Formel Ia oder Ie die Reste und Indices die folgende Bedeutung haben:
X = (C₁-C₄)-Alkoxy, bevorzugt Methoxy und Ethoxy, oder Halogen, bevorzugt Cl;
R = (C₁-C₄)-Alkyl, bevorzugt Methyl und Ethyl;
R' = (C₁-C₄)-Alkylen, bevorzugt Methylen, Ethylen und Propylen;
B, R°, a, b, c, d und e sind wie in Anspruch 1 definiert.

20. Silane nach einem oder mehreren der Ansprüche 18 oder 19, **dadurch gekennzeichnet, dass** B in der allgemeinen Formel Ia oder Ie einen substituierten oder unsubstituierten organischen Rest mit einer oder mehreren Acrylat- und/oder Methacrylat-Gruppen darstellt.

21. Verfahren zur Herstellung der Silane noch einem der Ansprüche 18 bis 20 **dadurch gekennzeichnet, dass** man bxe Mole einer Verbindung B(COOH)_{d} mit d Molen einer Verbindung [{OCN-R'}ₑR°_{c}]_{b}SiXₐR_{4-a-b} unter decarboxylierenden Bedingungen umsetzt, wobei die Reste und Indices wie in Anspruch 18 definiert sind.

## Claims

1. Use of hydrolyzable and polymerizable organically modified silanes of the following formulae 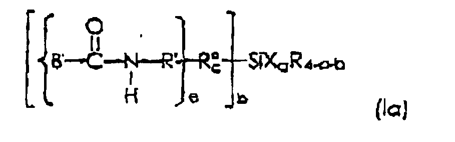 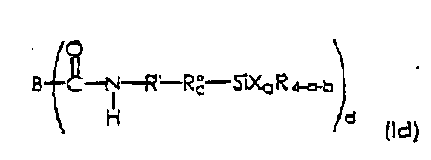 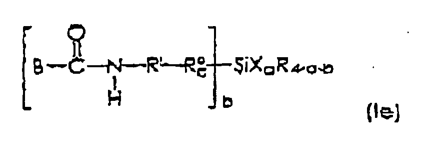 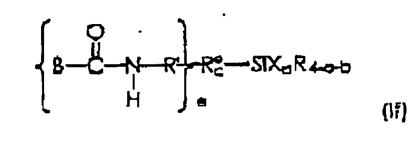 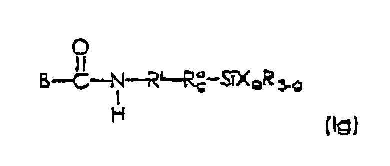 in which the radicals and indices have the following meaning:
B = straight-chain or branched organic radical having 2 to 50 carbon atoms and at least one C=C double bond, the -CO-NH- group being bonded to a carbon atom of the radical B, and B containing no norbornene, bicyclo[2.2.2]oct-2-ene or 7-oxabicyclo[2.2.1]hept-2-ene group;
R = optionally substituted alkyl, alkenyl, aryl, alkylaryl or arylalkyl, each having 1 to 15 carbon atoms, it being possible for these radicals to contain oxygen and/or sulfur and/or nitrogen atoms;
R° = optionally substituted alkylene, alkenylene, arylene, alkylenearylene or arylenealkylene, each having 1 to 15 carbon atoms, it being possible for these radicals to contain oxygen and/or sulfur and/or nitrogen atoms;
R' = optionally substituted alkylene, alkenylene, arylene, alkylenearylene or arylenealkylene, each having 1 to 15 carbon atoms, it being possible for these radicals to contain oxygen and/or sulfur and/or nitrogen atoms;
X = hydrogen, halogen, hydroxyl, alkoxy, acyloxy, alkylcarbonyl, alkoxycarbonyl or NR"₂, where R" is hydrogen, alkyl or aryl;
a= 1, 2 or 3;
b = 1, 2 or 3, wherein a+b = 2, 3 or 4;
c = 0 or 1;
d = 1, 2, 3, 4, 5, 6, 7, 8, 9 or 10;
e = 1, 2, 3 or 4, where e = 1 when c = 0,
for the preparation of organically modified silicic acid polycondensates or of organically modified silicic acid heteropolycondensates for all purposes, except the use of the prepared organically modified silicic acid polycondensates or organically modified silicic acid heteropolycondensates in dental materials, wherein the said condensates are prepared through hydrolytic condensation of one or more hydrolytically condensable compounds of silicon and optionally other elements from the group consisting of B, Al, P, Sn, Pb, the transition metals, the lanthanides and the actinides, and/or precondensates derived from the abovementioned compounds, optionally in the presence of a catalyst and/or of a solvent, by the action of water or of moisture, wherein from 1 to 100 mol %, based on monomeric compounds, of the hydrolytically condensable compounds are selected from silanes of the general formulae Ia, Id, Ie, If, or Ig.

2. Use according to claim 1, **characterized in that** in the general formulae la, Id, Ie, If or Ig, the radicals and indices have the following meaning:
X = (C₁-C₄)-alkoxy, preferably methoxy or ethoxy, or halogen, preferably Cl;
R = (C₁-C₄)-alkyl, preferably methyl and ethyl;
R' = (C₁-C₄)-alkylene, preferably methylene, ethylene and propylene;
B, R°, a, b, c, d and e being as defined in claim 1.

3. Use according to one or more of claims 1 or 2, **characterized in that** B in formulae Ia, Id, Ie, If or Ig is a substituted or unsubstituted organic radical comprising one or more acrylate and/or methacrylate groups.

4. Use according to claim 3, **characterized in that** the radical B is derived from acrylates and/or from methacrylates of trimethylolpropane, of glycerol, of pentaerythritol, of dipentaerythritol, of C₂-C₄-alkanediols, of polyethylene glycols, of polypropylene glycols or of optionally substituted and/or alkoxylated bisphenol A.

5. Use according to claim 1 wherein in formulae Ia or Ie, b is 2 or 3.

6. Use as claimed in any of the preceding claims, **characterized in that** one or more initiators are added to the polycondensate and **in that** the polycondensate is cured thermally and/or photochemically and/or by redox initiation.

7. Use as claimed in any of the preceding claims, **characterized in that** one or more components capable of free radical and/or ionic and/or covalent nucleophilic polymerization are added to the polycondensate before curing.

8. Use as claimed in any of the preceding claims for the preparation of bulk materials, of coating lacquers, of composites, of adhesives, of casting and sealing compounds, of coating materials, of coatings, of abrasives, of adhesion promoters, of binders, of fillers, of fibers, of films, of grinding discs, and of (contact) lenses as well as for use in the reaction extruder and for the priming of fillers and fibers.

9. Use according to any of the preceding claims for optical, electric or electronic purposes.

10. Use of organically cross-linked or organically cross-linkable silicic acid polycondensates or silicic acid heteropolycondensates, respectively, obtained by hydrolytic condensation and optionally organic cross-linking of at least one hydrolyzable and polymerizable organically modified silane of the following formulae 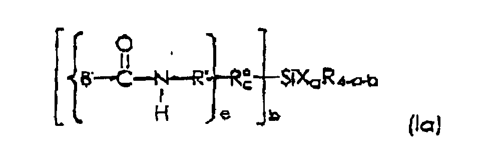 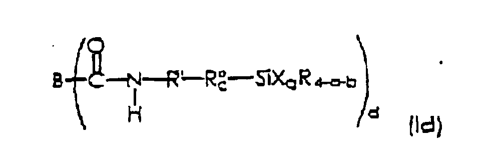 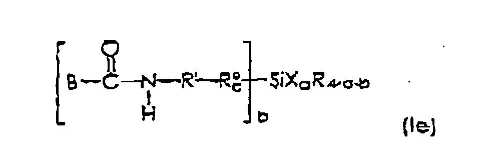 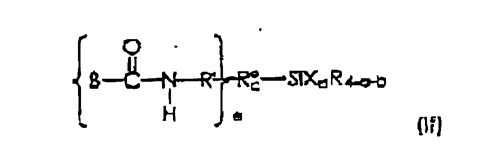 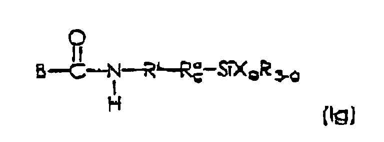 in which the radicals and indices have the following meaning:
B = straight-chain or branched organic radical having 2 to 50 carbon atoms and at least one C=C double bond, the -CO-NH- group being bonded to a carbon atom of the radical B, and B containing no norbornene, bicyclo[2.2.2]oct-2-ene or 7-oxabicyclo[2.2.1]hept-2-ene group;
R = optionally substituted alkyl, alkenyl, aryl, alkylaryl or arylalkyl, each having 1 to 15 carbon atoms, it being possible for these radicals to contain oxygen and/or sulfur and/or nitrogen atoms;
R° = optionally substituted alkylene, alkenylene, arylene, alkylenearylene or arylenealkylene, each having 1 to 15 carbon atoms, it being possible for these radicals to contain oxygen and/or sulfur and/or nitrogen atoms;
R' = optionally substituted alkylene, alkenylene, arylene, alkylenearylene or arylenealkylene, each having 1 to 15 carbon atoms, it being possible for these radicals to contain oxygen and/or sulfur and/or nitrogen atoms;
X = hydrogen, halogen, hydroxyl, alkoxy, acyloxy, alkylcarbonyl, alkoxycarbonyl or NR"₂, where R" is hydrogen, alkyl or aryl;
a = 1, 2 or 3 ;
b = 1, 2 or 3, wherein a+b = 2, 3 or 4;
c = 0 or 1;
d= 1, 2, 3, 4, 5, 6, 7, 8, 9 or 10 ;
e = 1, 2, 3 or 4, where e = 1 when c = 0,
optionally in the presence of further components, in compositions for all purposes, except for dental materials as well as for methods for the treatment of the human or animal body by surgery or therapy and diagnostic methods practised on the human or animal body.

11. Use as claimed in claim 10 wherein the compositions are used for filling materials, bulk materials, adhesives, injection molding particles, casting compounds, sealing compounds, films, fibers, particles, abrasives, (contact) lenses, adhesion promoters, binders, embedding materials, coating materials or coatings, especially for optical, optoelectric or electronic purposes.

12. Use according to any of claims 10 or 11, wherein in formulae (Ia) and (Ie), b is 2 or 3.

13. Use as claimed in any of claims 10 to 12, **characterized in that** in the general formulae Ia, Id, Ie, If or Ig, the radicals and indices have the following meaning:
X = (C₁-C₄)-alkoxy, preferably methoxy or ethoxy, or halogen, preferably Cl;
R = (C₁-C₄)-alkyl, preferably methyl and ethyl;
R' = (C₁-C₄)-alkylene, preferably methylene, ethylene and propylene;
B, R°, a, b, c, d and e being as defined in claim 1.

14. Use according to any of claims 10 to 13, **characterized in that** B in formulae Ia, Id, Ie, If or Ig is a substituted or unsubstituted organic radical comprising one or more acrylate and/or methacrylate groups.

15. Use as claimed in claim 14, **characterized in that** the radical B is derived from acrylates and/or from methacrylates of trimethylolpropane, of glycerol, of pentaerythritol, of dipentaerythritol, of C₂-C₄-alkanediols, of polyethylene glycols, of polypropylene glycols or of optionally substituted and/or alkoxylated bisphenol A.

16. Use according to any of claims 10 to 15, **characterized in that** one or more initiators have been added to the polycondensate for curing the polycondensate thermally and/or photochemically and/or by redox initiation.

17. Use according to any of claims 10 to 16, **characterized in that** the polycondensate comprises one or more radically and/or ionically and/or covalent-nucleophilically polymerizable components or such components which can be polymerized into it.

18. Hydrolyzable and polymerizable organically modified silanes of the following formulae 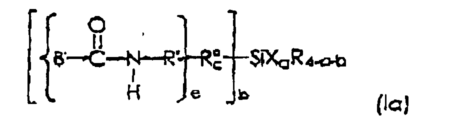 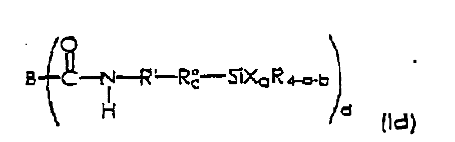 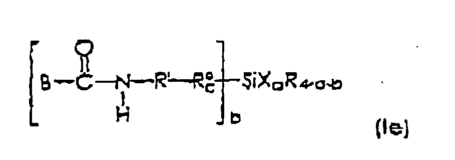 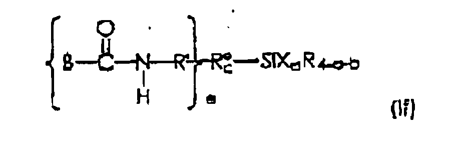 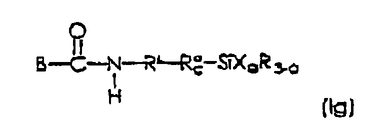 in which the radicals and indices have the following meaning:
B = straight-chain or branched organic radical having 2 to 50 carbon atoms and at least one C=C double bond, the -CO-NH- group being bonded to a carbon atom of the radical B, and B containing no norbornene, bicyclo[2.2.2]oct-2-ene or 7-oxabicyclo[2.2.1]hept-2-ene group;
R = optionally substituted alkyl, alkenyl, aryl, alkylaryl or arylalkyl, each having 1 to 15 carbon atoms, it being possible for these radicals to contain oxygen and/or sulfur and/or nitrogen atoms;
R° = optionally substituted alkylene, alkenylene, arylene, alkylenearylene or arylenealkylene, each having 1 to 15 carbon atoms, it being possible for these radicals to contain oxygen and/or sulfur and/or nitrogen atoms;
R' = optionally substituted alkylene, alkenylene, arylene, alkylenearylene or arylenealkylene, each having 1 to 15 carbon atoms, it being possible for these radicals to contain oxygen and/or sulfur and/or nitrogen atoms;
X = hydrogen, halogen, hydroxyl, alkoxy, acyloxy, alkylcarbonyl, alkoxycarbonyl or NR"₂, where R" is hydrogen, alkyl or aryl;
a = 1, 2 or 3;
b = 2 or 3, wherein a+b = 2, 3 or 4;
c= 0 or 1;
d= 1, 2, 3, 4, 5, 6, 7, 8, 9 or 10;
e = 1, 2, 3 or 4, where e = 1 when c = 0,

19. Silanes according to claim 18, **characterized in that** in the general formulae Ia or Ie the radicals and indices have the following meaning:
X = (C₁-C₄)-alkoxy, preferably methoxy or ethoxy, or halogen, preferably Cl;
R = (C₁-C₄)-alkyl, preferably methyl and ethyl;
R' = (C₁-C₄)-alkylene, preferably methylene, ethylene and propylene;
B, R°, a, b, c, d and e being as defined in claim 1.

20. Silanes according to one or more of claims 18 or 19, **characterized in that** B in the general formula (Ia) or (Ie) is a substituted or unsubstituted organic radical comprising one or more acrylate and/or methacrylate groups.

21. A process for the preparation of the silanes as claimed in claims 18 to 21, **characterized in that** b x e moles of a compound B(COOH)_{d} are reacted with d moles of a compound [{OCN-R'}ₑR°_{c}]_{b}SiXₐR_{4-a-b} under decarboxylating conditions, the radicals and indices being defined as in claim 18.

## Revendications

1. Utilisation de silanes modifiés par voie organique, pouvant être hydrolysés et polymérisés, répondant aux formules suivantes : 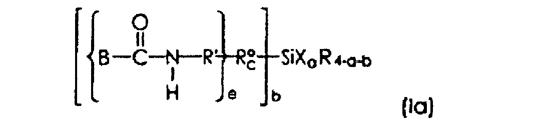 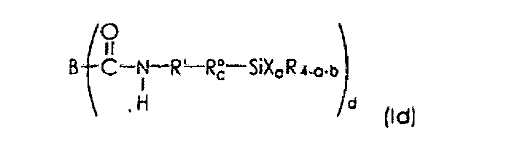 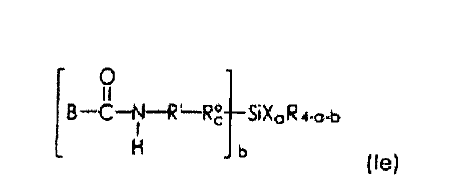 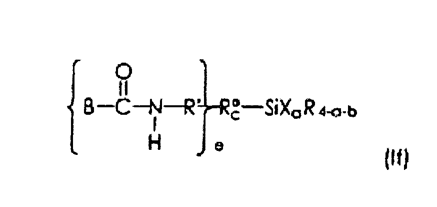 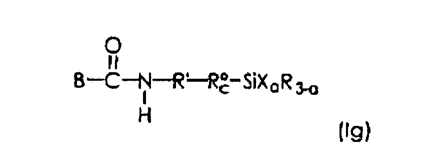 dans lesquelles les radicaux et les indices ont la signification suivante :
B représente un radical organique linéaire ou ramifié ayant 2 à 50 atomes de carbone et ayant au moins une double liaison C=C, le groupement -CO-NH- étant lié à un atome de carbone du radical B, et le radical B ne contenant pas de groupement norbornène, bicyclo[2.2.2]oct-2-ène ou 7-oxabicyclo[2.2.1]hept-2-ène ;
R représente un groupement alkyle, alcényle, aryle, alkylaryle ou arylalkyle, éventuellement substitué, contenant respectivement 1 à 15 atomes de carbone, ces radicaux pouvant contenir des atomes d'oxygène et/ou de soufre et/ou d'azote ;
R° représente un groupement alkylène, alcénylène, arylène, alkylène-arylène ou arylène-alkylène, éventuellement substitué, contenant respectivement 1 à 15 atomes de carbone, ces radicaux pouvant contenir des atomes d'oxygène et/ou de soufre et/ou d'azote ;
R' représente un groupement alkylène, alcénylène, arylène, alkylène-arylène ou arylène-alkylène, éventuellement substitué, contenant respectivement 1 à 15 atomes de carbone, ces radicaux pouvant contenir des atomes d'oxygène et/ou de soufre et/ou d'azote ;
X représente l'hydrogène, un halogène, un groupement hydroxyle, alcoxy, acyloxy, alkylcarbonyle, alcoxycarbonyle ou NR"₂, R" représentant l'hydrogène, un alkyle ou un aryle ;
a vaut 1, 2 ou 3 ;
b vaut 1, 2 ou 3, a + b valant 2, 3 ou 4 ;
c vaut 0 ou 1 ;
d vaut 1, 2, 3, 4, 5, 6, 7, 8, 9 ou 10 ;
e vaut 1, 2, 3 ou 4, e valant 1 si c vaut 0. pour la fabrication de polycondensats d'acide silicique modifiés par voie organique ou d'hétéropolycondensats d'acide silicique modifiés par voie organique, à des fins d'application quelconques, excepté l'utilisation des polycondensats d'acide silicique modifiés par voie organique ou des hétéropolycondensats d'acide silicique modifiés par voie organique dans les matériaux dentaires, les condensats cités étant produits par condensation par hydrolyse d'un ou de plusieurs composés de silicium condensables par hydrolyse et, éventuellement, d'autres éléments du groupe constitué des éléments B, Al, P, Sn, Pb, des métaux de transition, des lanthanides et des actinides et/ou des précondensats dérivés des composés précités, éventuellement en présence d'un catalyseur et/ou d'un solvant, par action d'eau ou d'humidité, et en choisissant 1 à 100 % en mole des composés condensables par hydrolyse, sur la base des composés monomères, parmi les silanes de formule générale Ia, Id, Ie, If ou Ig cités.

2. Utilisation selon la revendication 1, **caractérisée en ce que**, dans les formules générales Ia, Id, Ie, If ou Ig, les radicaux et les indices ont la signification suivante :
X représente un alcoxy en C₁-C₄, de préférence, un méthoxy et un éthoxy, ou un halogène, de préférence, Cl ;
R représente un alkyle en C₁-C₄, de préférence, un méthyle et un éthyle ;
R' représente un alkylène en C₁-C₄, de préférence, un méthylène, un éthylène et un propylène ;
B, R°, a, b, c, d et e sont tels que définis dans la revendication 1.

3. Utilisation selon l'une ou plusieurs des revendications 1 ou 2, **caractérisée en ce que** le radical B représente, dans les formules générales Ia, Id, Ie, If ou Ig, un radical organique substitué ou non substitué, comprenant un ou plusieurs groupements acrylate et/ou méthacrylate.

4. Utilisation selon la revendication 3, **caractérisée en ce que** le radical B dérive d'esters d'acide acrylique et/ou d'esters d'acide méthacrylique et du triméthylolpropane, du glycérol, du pentaérythritol, du dipentaérythritol, d'alcanediols en C₂-C₄, de polyéthylènegycols, de polypropylèneglycols ou du bisphénol A éventuellement substitué et/ou alcoxylé.

5. Utilisation selon la revendication 1, dans laquelle dans la formules Ia ou Ie, b vaut 2 ou 3.

6. Utilisation selon l'une quelconque des revendications précédentes, **caractérisée en ce que** l'on ajoute un ou plusieurs initiateurs au polycondensat et **en ce que** l'on durcit le polycondensat par voie thermique et/ou photochimique et/ou par induction redox.

7. Utilisation selon l'une quelconque des revendications précédentes, **caractérisée en ce que** l'on ajoute un ou plusieurs composés polymérisables par voie radicalaire et/ou ionique et/ou covalente-nucléophile.

8. Utilisation selon l'une quelconque des revendications précédentes, pour fabriquer des matériaux en vrac, des vernis de revêtement, des composites, des colles, des masses de scellement et d'étanchéité, des matériaux de revêtement, des enductions, des produits abrasifs, des agents adhésifs, des liants, des charges, des fibres, des feuilles, des meules et des lentilles (de contact), ainsi que pour l'utilisation dans une extrudeuse réactionnelle et pour l'application d'une couche de fond sur des charges et des fibres.

9. Utilisation selon l'une quelconque des revendications précédentes à des fins d'application en optique, en électricité ou en électronique.

10. Utilisation de polycondensats d'acide silicique réticulés par voie organique, ou pouvant être réticulés par voie organique, ou de ces hétéropolycondensats d'acide silicique obtenus par condensation par hydrolyse et, éventuellement, par réticulation organique d'au moins un silane hydrolysable et polymérisable modifié par voie organique, répondant aux formules suivantes : 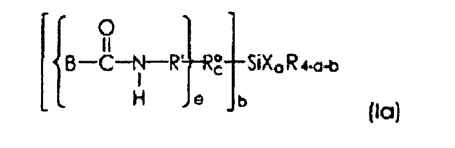 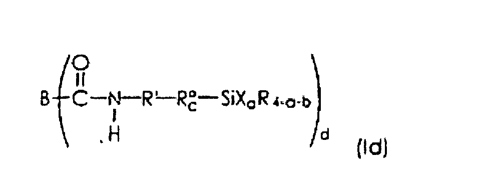 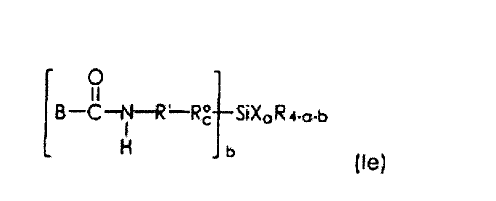 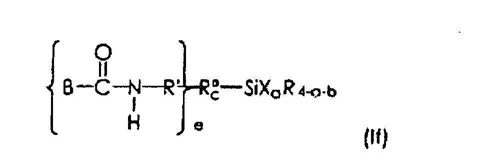 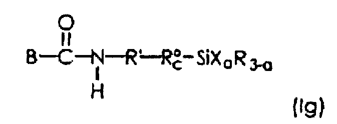 dans lesquelles les radicaux et les indices ont la signification suivante :
B représente un radical organique linéaire ou ramifié ayant 2 à 50 atomes de carbone et ayant au moins une double liaison C=C, le groupement -CO-NH-étant lié à un atome de carbone du radical B et le radical B ne contenant pas de groupement norbornène, bicyclo [2 .2 .2] oct-2-ène ou 7-oxabicyclo [2 .2.1] hept-2-ène ;
R représente un groupement alkyle, alcényle, aryle, alkylaryle ou arylalkyle, éventuellement substitué, contenant respectivement 1 à 15 atomes de carbone, ces radicaux pouvant contenir des atomes d'oxygène et/ou de soufre et/ou d'azote ;
R° représente un groupement alkylène, alcénylène, arylène, alkylène-arylène ou arylène-alkylène, éventuellement substitué, contenant respectivement 1 à 15 atomes de carbone, ces radicaux pouvant contenir des atomes d'oxygène et/ou de soufre et/ou d'azote ;
R' représente un groupement alkylène, alcénylène, arylène, alkylène-arylène ou arylène-alkylène, éventuellement substitué, contenant respectivement 1 à 15 atomes de carbone, ces radicaux pouvant contenir des atomes d'oxygène et/ou de soufre et/ou d'azote ;
X représente l'hydrogène, un halogène, un groupement hydroxyle, alcoxy, acyloxy, alkylcarbonyle, alcoxycarbonyle ou NR"₂, R" représentant l'hydrogène, un alkyle ou un aryle ;
a vaut 1, 2 ou 3 ;
b vaut 1, 2 ou 3, a + b valant 2, 3 ou 4 ;
c vaut 0 ou 1 ;
d vaut 1, 2, 3, 4, 5, 6, 7, 8, 9 ou 10 ;
e vaut 1, 2, 3 ou 4, e valant 1 si c vaut 0, éventuellement en présence d'autres composants,
dans des compositions à des fins d'application quelconques, à l'exception des matériaux dentaires et des procédés de traitement chirurgical ou thérapeutique du corps humain ou animal, ainsi que des procédés de diagnostic qui sont effectués sur le corps humain ou animal.

11. Utilisation selon la revendication 10, **caractérisée en ce que** l'on utilise les compositions comme charges, matériaux en vrac, colles, masses de moulage par injection, masses de scellement, masses d'étanchéité, feuilles, fibres, particules, produits abrasifs, lentilles (de contact), agents adhésifs, liants, matériaux d'enrobage, masses d'enduction ou revêtements, en particulier, à des fins d'applications dans le domaine optique, optoélectrique ou électronique.

12. Utilisation selon l'une quelconque des revendications 10 ou 11, dans laquelle dans les formules (Ia) et (Ie), b vaut 2 ou 3.

13. Utilisation selon l'une quelconque des revendications 10 à 12, **caractérisée en ce que**, dans les silanes de formules générales Ia, Id, Ie, If ou Ig, les radicaux et les indices ont la signification suivante :
X représente un alcoxy en C₁-C₄, de préférence un méthoxy ou un éthoxy, ou un halogène, de préférence, Cl ;
R représente un alkyle en C₁-C₄, de préférence, un méthyle et un éthyle ;
R' représente un alkylène en C₁-C₄, de préférence, un méthylène, un éthylène et un propylène ;
B, R°, a, b, c, d et e sont tels que définis dans la revendication 1.

14. Utilisation selon l'une quelconque des revendications 10 à 13, **caractérisée en ce que** le radical B représente, dans les silanes de formules générales Ia, Id, Ie, If ou Ig, un radical organique substitué ou non substitué, ayant un ou plusieurs groupements acrylate et/ou méthacrylate.

15. Utilisation selon la revendication 14, **caractérisée en ce que** le radical B dérive d'esters d'acide acrylique et/ou d'esters d'acide méthacrylique du triméthylolpropane, du glycérol, du pentaérythritol, du dipentaérythritol, d'alcanediols en C₂-C₄, de polyéthylènegycols, de polypropylèneglycols ou du bisphénol A éventuellement substitué et/ou alcoxylé.

16. Utilisation selon l'une quelconque des revendications 10 à 15, **caractérisée en ce que** l'on ajoute un ou plusieurs initiateurs au polycondensat, dans le but d'un durcissement par voie thermique et/ou photochimique et/ou par induction redox.

17. Utilisation selon l'une quelconque des revendications 10 à 16, **caractérisée en ce que** le polycondensat contient un ou plusieurs composés à l'état polymérisé ou polymérisables par voie radicalaire et/ou ionique et/ou covalente-nucléophile.

18. Silanes modifiés par voie organique, hydrolysables et polymérisables, répondant aux formules suivantes : 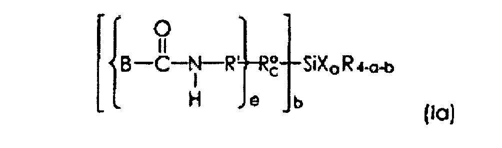 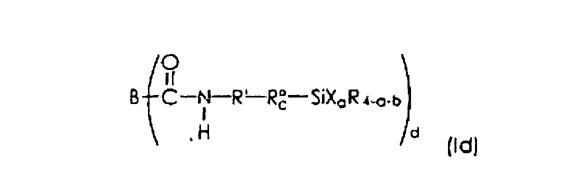 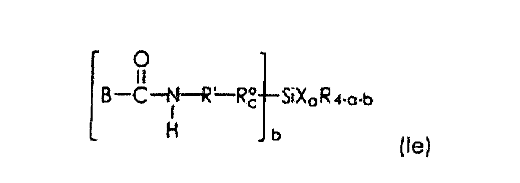 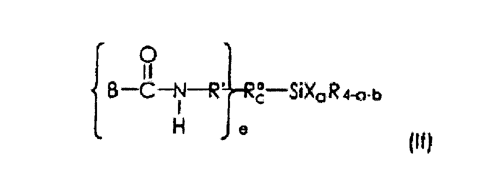 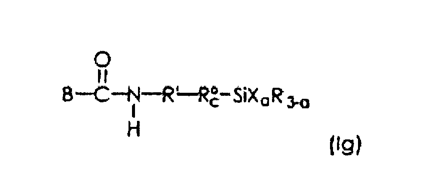 dans lesquelles les radicaux et les indices ont la signification suivante :
B représente un radical organique linéaire ou ramifié ayant 2 à 50 atomes de carbone et ayant au moins une double liaison C=C, le groupement -CO-NH-étant lié à un atome de carbone du radical B et le radical B ne contenant pas de groupement norbornène, bicyclo[2.2.2]oct-2-ène ou 7-oxabicyclo[2.2.1]hept-2-ène ;
R représente un groupement alkyle, alcényle, aryle, alkylaryle ou arylalkyle, éventuellement substitué, contenant respectivement 1 à 15 atomes de carbone, ces radicaux pouvant contenir des atomes d'oxygène et/ou de soufre et/ou d'azote ;
R° représente un groupement alkylène, alcénylène, arylène, alkylène-arylène ou arylène-alkylène, éventuellement substitué, contenant respectivement 1 à 15 atomes de carbone, ces radicaux pouvant contenir des atomes d'oxygène et/ou de soufre et/ou d'azote ;
R' représente un groupement alkylène, alcénylène, arylène, alkylène-arylène ou arylène-alkylène, éventuellement substitué, contenant respectivement 1 à 15 atomes de carbone, ces radicaux pouvant contenir des atomes d'oxygène et/ou de soufre et/ou d'azote ;
X représente l'hydrogène, un halogène, un groupement hydroxyle, alcoxy, acyloxy, alkylcarbonyle, alcoxycarbonyle ou NR"₂, R" représentant l'hydrogène, un alkyle ou un aryle ;
a vaut 1, 2 ou 3 ;
b vaut 2 ou 3, a + b valant 2, 3 ou 4 ;
c vaut 0 ou 1 ;
d vaut 1, 2, 3, 4, 5, 6, 7, 8, 9 ou 10 ;
e vaut 1, 2, 3 ou 4, e valant 1 si c vaut 0.

19. Silanes selon la revendication 18, **caractérisés en ce que**, dans les formules générales Ia ou Ie, les radicaux et les indices ont la signification suivante :
X représente un alcoxy en C₁-C₄, de préférence, un méthoxy et un éthoxy, ou un halogène, de préférence, Cl ;
R représente un alkyle en C₁-C₄, de préférence, un méthyle et un éthyle ;
R' représente un alkylène en C₁-C₄, de préférence, un méthylène, un éthylène et un propylène ;
B, R°, a, b, c, d et e sont tels que définis dans la revendication 1.

20. Silanes selon l'une ou plusieurs des revendications 18 ou 19, **caractérisés en ce que** le radical B représente, dans les formules générales Ia ou Ie, un radical organique substitué ou non substitué, comprenant un ou plusieurs groupements acrylate et/ou méthacrylate.

21. Procédé de fabrication des silanes selon l'une quelconque des revendications 18 à 20, **caractérisé en ce que** l'on fait réagir b x e moles d'un composé B(COOH)_{d} avec d moles d'un composé [{OCN-R' }ₑR°_{c}]_{b}SiXₐR_{4-a-b}, dans des conditions de décarboxylation, les radicaux et les indices étant tels que définis dans la revendication 18.
